(19)

Europäisches
Patentamt
European
Patent Office
Office européen
des brevets

(11) EP 2 172 729 A1

(12) EUROPEAN PATENT APPLICATION
published in accordance with Art. 153(4) EPC

(43) Date of publication:
07.04.2010 Bulletin 2010/14

(51) Int Cl.:
$F28F\ 1/32$ (2006.01) $\quad B01D\ 53/26$ (2006.01)
$F25B\ 17/08$ (2006.01)

(21) Application number: 08826822.2

(22) Date of filing: 25.07.2008

(86) International application number:
PCT/JP2008/063353

(87) International publication number:
WO 2009/017039 (05.02.2009 Gazette 2009/06)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 27.07.2007 JP 2007195668

(71) Applicant: Mitsubishi Electric Corporation
Chiyoda-ku
Tokyo 100-8310 (JP)

(72) Inventors:
• MAEGAWA, Takeyuki
Tokyo 100-8310 (JP)

• MORIMOTO, Hiroyuki
Tokyo 100-8310 (JP)
• SUGIMOTO, Takeshi
Tokyo 100-8310 (JP)
• YAMASHITA, Tetsuya
Tokyo 100-8310 (JP)
• YAMASHITA, Koji
Tokyo 100-8310 (JP)
• MATSUOKA, Fumio
Tokyo 100-8310 (JP)

(74) Representative: Sajda, Wolf E. et al
Meissner, Bolte & Partner GbR
Postfach 86 06 24
81633 München (DE)

(54) HEAT EXCHANGER, METHOD OF PRODUCING THE HEAT EXCHANGER

(57) A heat exchanger is used which has heat transfer tubes acting as flow paths of a refrigerant and metal fins having pores opened inward from the surfaces thereof for adsorbing and desorbing moisture in air within the range of a relative pressure of 0.1 to 0.9 so as to transfer heat of the heat transfer tubes to air, wherein the pores have a diameter of 1 nm to 20 nm and a depth of 1 to 100 $\mu$m.

FIG. 1

EP 2 172 729 A1

**Description**

Technical Field

The present invention relates to a heat exchanger having a function for adsorbing and desorbing moisture in air and a manufacturing method of the same.

Background Art

Ordinarily, a cold/heat apparatus such as an air conditioning system or a refrigeration system has a metal heat exchanger acting as an evaporator and a condenser. A material having a high thermal conductivity such as aluminum, stainless steel or copper is used as a material of the heat exchanger. When the heat exchanger acts as the evaporator, a low-temperature refrigerant passes through a tube, and heat exchange is executed to absorb heat in air. At the time, since moisture (water vapor) in air is cooled on a surface of the tube and condensed, deposited thereon as frosts, and covers the heat exchanger, heat is not exchanged well between the refrigerant and air as an operation time passes, and thus the operation efficiency is deteriorated. To cope with the above problem, a defrost operation is executed for defrosting, for example, by causing a high temperature refrigerant to pass through the tube to periodically heat the evaporator.

However, since the defrost operation consumes a large amount of energy, it has a problem not only in energy saving but also in an increase of a temperature in the vicinity of the heat exchanger.

Therefore, there is devised an adsorption heat exchanger capable of suppressing moisture (water vapor) cooled by a heat exchanger from being phase changed to a frost and further improving the heat transfer efficiency of the heat exchanger by adsorption and desorption (refer to, for example, Patent Document 1). The adsorption heat exchanger is arranged such that a solid adsorbing material, for example, adsorbing particles of silica gel, zeolite, activated alumina, and the like are fixed on a surface of the heat exchanger. It is said in, for example, Patent Document 1 that heat can be transferred well to the adsorbing particles and adsorption/desorption characteristics can be improved, by bonding particle-like silica gel and a heat transfer member of the heat exchanger by filling a space therebetween with a binder containing highly thermal conductive material such as graphite.

Further, as another mode of the adsorption heat exchanger, there is a method of increasing an effective heat transfer area by etching fins, so that fins of a heat exchanger have concave portions, in place of increasing the effective heat transfer area by attaching the adsorbing materials to the fins of the heat exchanger so as to form convex portions (refer to, for example, Patent Document 2). Patent Document 2 proposes a heat exchanger for adsorbing and desorbing refrigerant vapor and water vapor by forming pores of several angstroms to several hundreds of angstroms on heat transfer surfaces of a heat exchanger, which acts as a contact surface to air, by a method of an anodizing process and the like.

It is said in Patent Document 2 that there can be obtained heat transfer surfaces of the heat exchanger excellent in a heat transfer performance effective to promote migration of heat and a substance, because the pores capable of directly adsorbing water vapor are formed on the heat transfer surfaces of the heat exchanger and thus adsorbing materials and a binder as disclosed in Patent Document 1 are not necessary.

Patent Document 1: Japanese Unexamined Patent Application Publication JP-A-10-286 460 (Fig. 1)
Patent Document 2: Japanese Unexamined Patent Application Publication JP-A-2005-127 683 (Fig. 1)

Disclosure of the Invention

Problems to be solved by the Invention

In a system for fixing an adsorbing material which is ceramic powder on fins of a heat exchanger as disclosed in Patent Document 1, a contact portion where a heat exchanger main body is in contact with the adsorbing material can be easily increased when the thickness of the adsorbing material is increased. However, it is not easy to keep the ceramic adsorbing material intrinsically having a small thermal expansion coefficient in a state that they are fixed to a surface of metal having a large thermal expansion coefficient at all times. When, for example, a temperature varies in the state that they are fixed to each other, since they have different expansion rates, they are shifted from each other and the adsorbing material drops.

Further, even if a binder is used, since the micron-order powder (adsorbing material) is only in point contact with the metal, it is difficult to bond the adsorbing material to the fins of the heat exchanger with sufficient strength. Further, since powder-like adsorbing materials such as zeolite, and silica gel, strongly adsorb moisture into pores, even if the adsorbing materials are heated by the quantity of heat (temperature) of a refrigerant flowing in an ordinary heat exchanger, it is difficult to perfectly desorb the moisture. Accordingly, to obtain a sufficient amount of adsorption by such adsorbing materials, since a lot of adsorbing materials must be fixed to fin plates of the heat exchanger as a result, this becomes more disadvantageous in the drop of the adsorbing materials described above and in the heat transfer surfaces.

In contrast, in Patent Document 2, heat transfer surfaces, which are in contact with metal and have an excellent heat transfer performance, are made by forming concave portions acting as pores by etching the surface of fins of a heat exchanger. Further, an adsorption capacity and an adsorption/desorption speed are increased by controlling a pore diameter, and the adsorption capacity can be more increased by carrying adsorbing materials such as silica gel in the pores formed on the heat transfer surfaces.

Since the invention can increase the area of effective heat transfer surfaces when a pore size is small, or a contact heat resistance between the heat transfer surfaces and the adsorbing materials can be reduced by carrying a lot of the adsorbing materials such as silica gel and the like on the heat transfer surfaces when the pore size is conversely large, with a result that the heat transfer performance of the heat exchanger can be improved.

Accordingly, an amount of adsorption and adsorption characteristics of refrigerant vapor and moisture vapor cannot be controlled according to a humidity environment and a temperature environment in the circumference in which the heat exchanger is actually used, so that a problem arises in that a sufficient amount of adsorption cannot be obtained on the heat transfer surfaces of the heat exchanger.

Further, the pores disclosed in Patent Document 2 are formed on aluminum heat transfer surfaces by anodization. Since the pores have such a property that they easily react with moisture in air and are clogged as time passes, they have a problem in that a desired pore size cannot be stably obtained and stability with time becomes at stake, in addition to that a sufficient adsorbing performance cannot be obtained.

Accordingly, an object of the present invention, which was made to solve the above problems, is to provide a heat exchanger in which an excellent adsorbing performance can be obtained in a particular humidity and a particular temperature range to which the heat exchanger is exposed by highly controlling a pore structure on metal fin surfaces of the heat exchanger, specifically by highly controlling a pore diameter and a pore depth.

Further, the present invention also explains a manufacturing method of the heat exchanger, and an object thereof is to provide the method capable of stably manufacturing the heat exchanger at a less expensive cost in an industrial scale.

Means for Solving the Problems

A heat exchanger according to the present invention for executing heat exchange between a refrigerant and air has a feature in that the heat exchanger has a pore structure designed according to an environment in which it is used, i.e., a pore structure in which a pore diameter is within the range of 1 nm to 20 nm and a pore depth is 1 $\mu$m to 100 $\mu$m. Further, a maximum amount of moisture, which can be adsorbed, is determined by the volume of pores specified by the pore diameter and the pore depth, and there is selected a pore structure by which an appropriate amount of moisture can be adsorbed with respect to an environment of a target space to which a heat exchanger is exposed.

At the time, the pores are opened inward from the surfaces of metal fins, and the number of pores, which realize a capillary condensation phenomenon at a predetermined relative pressure, is increased by forming the pores having the same pore diameter (diameter) as many as possible so that a steep increase of an adsorbing/desorbing amount can be realized.

Advantages of the Invention

According to the present invention, since the pores, which realize a capillary condensation phenomenon according to the relative pressure of water vapor in an environment of a target space to which the heat exchanger is exposed, are formed on the surfaces of the metal fins of the heat exchanger so that the metal fins themselves of the heat exchanger adsorb a lot of water vapor, the lot of water vapor can be efficiently and easily adsorbed. Further, when water vapor is desorbed, energy necessary to desorption can be reduced because moisture is not so strongly adsorbed to pore walls and a heat transfer efficiency is good when, for example, heating is executed by a refrigerant.

Further, since the pores are directly formed in the heat exchanger, exfoliation (peeling off) of a powder-like adsorbing material, from which a serious problem arises in a case when the powder-like adsorbing material is carried by the heat exchanger, can be avoided. As a result, it is not necessary to worry about reduction of a performance, and the heat exchanger can be managed in safe from a sanitation aspect and the like. Further, since the powder-like adsorbing material does not further clog the narrow intervals of the metal fins of the heat exchanger, the flow of air to be subjected to heat exchange is not blocked by the metal fins and thus the heat exchange can be efficiently executed from a viewpoint of energy.

Fig. 1     is an arrangement view showing a main portion of a heat exchanger 10 according to an Embodiment 1.
Fig. 2     is a schematic view of an adsorption isotherm by a capillary condensation phenomenon.
Fig. 3     shows the relation between a pore diameter and relative pressure at which a capillary condensation occurs.
Fig. 4     is a schematic view of a sectional structure of pores formed by anodization.
Fig. 5     is a schematic view of a sectional structure of a metal fin 20 having the pores formed on both surfaces.
Fig. 6     shows a water vapor adsorption isotherm of pores formed without performing a heat treatment.
Fig. 7     shows a process flow of an anodizing process according to the Embodiment 1.
Fig. 8     is an arrangement view of an anodizing apparatus according to the Embodiment 1.
Fig. 9     shows a water vapor adsorption isotherm of pores formed according to the Embodiment 1.
Fig. 10    is a distribution curve of the diameters of the pores formed according to the Embodiment 1.
Fig. 11    shows a water vapor adsorption isotherm of pores formed according to an Embodiment 2.
Fig. 12    is a distribution curve of the diameters of the pores formed according to the Embodiment 2
Fig. 13    shows a water vapor adsorption isotherm of pores formed according to an Embodiment 3.
Fig. 14    is a distribution curve of the diameters of the pores formed according to the Embodiment 3.
Fig. 15    shows a water vapor adsorption isotherm of pores formed according to an Embodiment 4.
Fig. 16    is a distribution curve of the diameters of the pores formed according to the Embodiment 4.
Fig. 17    is an arrangement view showing a main portion of a heat exchanger 10A according to an Embodiment 8.
Fig. 18    is a schematic arrangement view of a refrigerating cycle apparatus according to an Embodiment 9.
Fig. 19    is a graph showing the relation between an evaporation temperature and COP.
Fig. 20    is a schematic arrangement view of a refrigerating cycle apparatus according to an Embodiment 10.
Fig. 21    is a schematic arrangement view three-dimensionally showing a humidification unit of the refrigerating cycle apparatus.
Fig. 22    is an explanatory view showing a state that an air duct of an indoor unit is switched.
Fig. 23    is a P-h chart showing a state of a refrigerant in a refrigerating cycle.
Fig. 24    is an absolute humidity dry-bulb temperature graph explaining an operation of the refrigerating cycle apparatus.
Fig. 25    is a schematic arrangement view of a refrigerating cycle apparatus according to an Embodiment 11.
Fig. 26    is a schematic arrangement view showing an arrangement of an indoor unit in which an evaporator is built.
Fig. 27    is an explanatory view showing a state that an air duct of the indoor unit is switched.
Fig. 28    is a P-h chart showing a state of a refrigerant in a refrigerating cycle.
Fig. 29    is an absolute humidity dry-bulb temperature graph explaining an operation of the refrigerating cycle apparatus.
Fig. 30    is a schematic arrangement view of a refrigerating cycle apparatus according to an Embodiment 12.

Reference Numerals

| | |
|---|---|
| 10, 10A | heat exchanger |
| 20, 20A | metal fin |
| 30 | heat transfer tube |
| 31 | hair-pin tube |
| 41 | anode oxide film |
| 42 | pore |
| 43 | porous layer |
| 44 | barrier layer |
| 45 | base metal |
| 61 | direct current power supply |
| 62 | electrolyte |
| 63 | electrolyte vessel |
| 64 | carbon sheet |
| 65 | fin plate |
| 70, 70a, 70b, 70c, 70d | refrigerant piping |
| 80, 80a, 90, 90a | bypath piping |
| 100 | compressor |
| 200 | condenser |
| 300, 310, 320, 330, | |

(continued)

| | |
|---|---|
| 340, 350, 360,370 | on-off valve |
| 380, 390 | three-way valve |
| 400, 400a, 400b | heat exchanger |
| 410,410a,410b,410c,<br>410d, 410e, 410f | humidifying/dehumidifying heat exchanger |
| 500, 510 | backflow preventing means |
| 600, 610, 620, 630, 640, 850 | throttle device |
| 700 | evaporator |
| 800, 800a, 800b | control means |
| 810, 820 | temperature/humidity detecting means |
| 900, 910 | blower |
| 1000, 1000a, 1000b | refrigerating cycle apparatus |
| 3000, 3000a | indoor unit |
| 3010a, 3010b, 3020a, 3020b,<br>3030a, 3030b, 3040a, 3040b,<br>3110a, 3110b, 3120a, 3120b,<br>3130a, 3130b, 3140a, 3140b | air path switching means |
| 3050a, 3050b, 3150a, 3150b | air path adjusting means |
| 4000 | inside of refrigerated warehouse |
| 4010 | inside of room |
| 5000 | outside air. |

Best Mode for Carrying Out the Invention

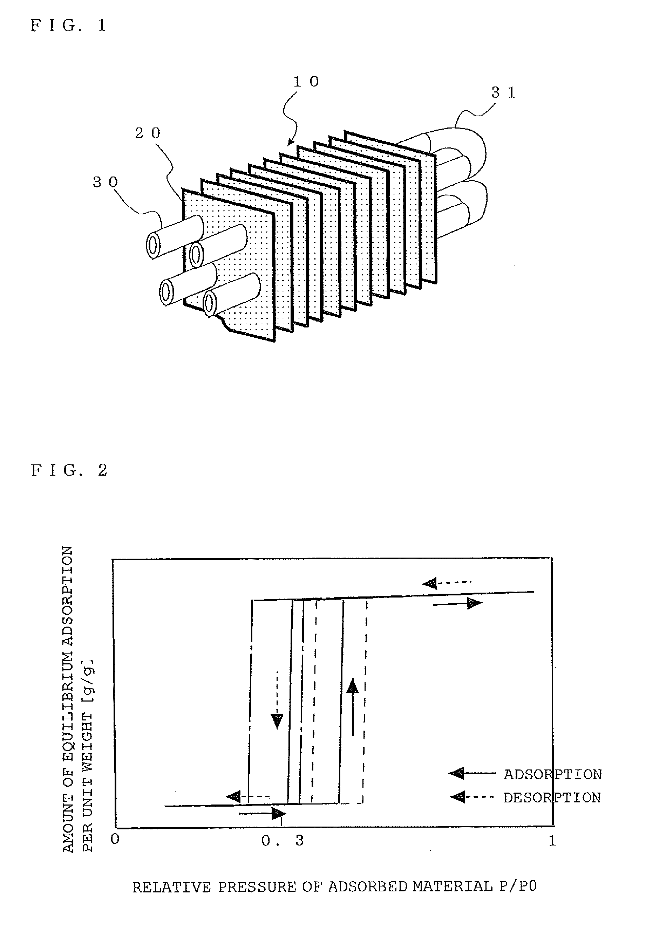

Fig. 1 is an arrangement view showing a main portion of a heat exchanger 10 according to the present invention. First, an arrangement, a function, and the like of the heat exchanger 10 of the present invention in respective embodiments will be explained based on Fig. 1. Here, the heat exchanger 10 of a fin tube type, which is widely used in a refrigerating apparatus, an air conditioner, and the like, will be explained.

The heat exchanger 10 is an apparatus used as an evaporator and a condenser in a refrigerating cycle apparatus. In particular, when the heat exchanger 10 acts as an evaporator, it exchanges heat between a low-temperature refrigerant (heat transfer medium) and air in a target space and cools the air by causing the refrigerant to absorb the heat of the air. The heat exchanger 10 is mainly composed of heat exchanger metal fins 20 (hereinafter, called metal fins 20), heat transfer tubes 30, and hair pin tubes 31.
The metal fins 20 of the embodiments are composed of a flat sheet (plate) using aluminum as its material which has a good thermal conductivity (about 230 W/mK) and can be easily subjected to processing such as pore forming processing. Further, the metal fins 20 have pores formed on the surfaces thereof (both surfaces) as described later.

The heat transfer tubes 30 are disposed so as to pass through through-holes formed to the metal fins 20 disposed at predetermined intervals. Each heat transfer tube 30 is arranged as a part of a refrigerant circuit in the refrigerating cycle apparatus, and a refrigerant flows in the tubes. Heat transfer areas, which act as contact surfaces with air, are enlarged by transferring the heat of the refrigerant flowing inside the heat transfer tubes 30 and the heat of air flowing outside thereof through the metal fins 20, thereby heat can be efficiently exchanged between the refrigerant and the air. The hair pin tubes 31 connect the heat transfer tubes 30 to one another.
In general, for the heat transfer tubes 30 and the hair pin tubes 31, copper which has a high thermal conductivity and is strong is used as a material thereof in many cases, the material is not limited to the copper. Although a series of tubes is constructed by connecting the heat transfer tubes 30 with the hair pin tubes 31, a tube path through which the heat transfer tubes 30 are connected is not particularly limited. For example, a flow path, which branches a flow of a refrigerant and joins branched flows, may be formed the heat transfer tubes 30 passing through the metal fins 20. Further, a number of the through-holes is not particularly limited.

The heat exchanger 10 according to the present invention is arranged such that it is provided with a pore structure, formed on heat transfer surfaces (here, particularly in the metal fins 20) in contact with air and designed according to an environment in which the heat exchanger 10 is used, that is, it is provided with pores having a pore diameter and a pore depth, and the pores have a function for adsorbing or desorbing an appropriate amount of moisture (water vapor) in air in the environment of a target space.
The pores are opened internally from the metal fins. Here, water existing in air as water vapor is steeply adsorbed and desorbed by the fact that capillary condensation begins in the pores at any of stages in which the relative pressure of the water vapor is within the range of about 0.1 to about 0.9. as to this range, it is considered more preferable that the capillary condensation begins within the range of about 0.3 to about 0.8 which has a highest possibility of application as an environment to which the heat exchanger 10 is exposed.

Further, adsorption executed in the pores will be examined. To efficiently increase an amount of adsorption under a predetermined relative pressure (in a predetermined environment), it is preferable to form the pores, in which the capillary condensation occurs at the relative pressure, as many as possible. That is, it is preferable to form a larger number of pores having the same diameter. However, when nano order pores are formed, since it is difficult to form all the pores to have the same diameter, the pore structure may be controlled within a range in which it can be actually controlled in view of an air environment to be used and an operating condition of the heat exchanger.

From what has been described above, in the present invention, the pores are formed to have an average pore diameter within the range from about 1 nm to about 20 nm (when a case in which the range is actually applied, it is preferably from 1 nm to 10 nm). Further, it is preferable that the pores of about 50 % or more in a predetermined range (for example, one metal fin 20, the overall heat exchanger 10, and the like) of the heat exchanger 10 under an environment of a target space to be dehumidified have diameters distributed within the range of about ±2 nm of the average diameter thereof.

The pores are formed so that they are perpendicular to the contact surfaces (heat transfer surfaces) with air in the heat exchanger 10. With this arrangement, a maximum pore volume can be obtained with respect to the limited surface area of fin plates constituting the metal fins 20 of the heat exchanger 10. Further, since the heat of a refrigerant is uniformly transferred as compared with, for example, a case in which pores are formed irregularly as in, adsorbing materials and the like, adsorption and desorption can be executed efficiently as to energy.

Here, a capillary condensation phenomenon will be explained. The condensation phenomenon is a phenomenon in which a gas is partially phase-changed to a liquid when a temperature drops. In, for example, three-dimensionally restricted spaces (capillaries) such as the insides of pores, it is known that there is a case in which gas molecules inside of pores are more stabilized when they are pulled to pore walls than when they are pulled to each other due to surface tension generated in an interface and that the gas molecules pulled to the pore walls are easily liquefied (condensed). When gas molecules are liquefied one by one, the insides of the pores are filled with the liquid, and when many gas molecules exist, a large amount of adsorbed liquid, with which the insides of the pores are completely filled, can be expected.

Further, in an ordinary adsorption phenomenon of gas molecules, since they are strongly adsorbed by the interaction with pore walls, a large amount of desorbing energy is necessary to desorb them. In contrast, since molecules, with which the insides of the pores are filled by capillary condensation, can be desorbed by relatively weak desorbing energy, input energy necessary to desorption can be reduced, and, in particular, this arrangement has a feature in that it is very advantageous as to energy when adsorption and desorption are repeatedly executed.

Fig. 2 is a view schematically showing adsorption characteristics (desorption characteristics), which can be obtained by the capillary condensation phenomenon as an adsorption isotherm (which also includes characteristics as to desorption, this is the same in the following description). The adsorption isotherm shows an amount of adsorption at the time when equilibrium adsorption is executed at respective pressures (concentrations) in a predetermined temperature (isothermal) condition.

In Fig. 2, a vertical axis shows an equilibrium amount of adsorption [g/g] per unit weight of a to-be-absorbed substance (here, water molecules) (although reference is made to adsorption, it is also made to absorption, and the equilibrium amount of adsorption is simply referred to as an amount of adsorption hereinafter), and a horizontal axis shows a relative partial pressure (relative pressure) at the time when a saturated vapor pressure at the temperature is shown by 1. In general, since an adsorption phenomenon accompanying the capillary condensation has hysteresis in an amount of adsorption during adsorption and desorption, it shows an adsorption isotherm having different characteristics for adsorption and desorption, respectively.

Fig. 2 schematically shows, as an example, an adsorption isotherm in which an amount of adsorption executed by pores steeply increases when the relative pressure of a to-be-adsorbed substance is about 0.3 and then is made to be a plateau (unchanged). This can be explained by views that the capillary condensation begins in a relative pressure region (of about 0.3) in which a steep increase of the amount of adsorption is observed, insides of pores are filled with an adsorbed liquid, and a large amount of adsorption can be obtained.

Incidentally, in the pores having the steep adsorption characteristic as shown in Fig. 2, the amount of adsorption outstandingly increases when the to-be-adsorbed substance has a relative pressure of about 0.3 or more. Thus, when a relative pressure in a periphery (in the environment) can be set to about 0.3 or more by any means, it is possible to promptly adsorb a lot of a to-be-adsorbed substance into the pores.

An effective method of increasing a relative pressure is to reduce a temperature of a peripheral environment of the pores for executing desorption. In, for example, the heat exchanger 10, when the heat transfer surfaces can be cooled by causing a refrigerant passing through the heat transfer tubes 30 to absorb the heat in the peripheral environment during adsorption, a relative pressure in the vicinity of the pores is increased and thus the amount of adsorption can be increased.

On the contrary, when the relative pressure is set to 0.3 or less, the amount of adsorption is outstandingly reduced. Thus, in this case, when the relative pressure in a periphery can be set to 0.3 or less by any means, a to-be-adsorbed substance can be desorbed from the pores inversely. Likewise, an effective method of reducing the relative pressure is to increase the temperature of the peripheral environment of the pores. In, for example, the heat exchanger 10, when the pores of the heat transfer surfaces can be heated by discharging heat by the refrigerant and the like, an amount of desorption can be increased.

Incidentally, a relative pressure region, in which the adsorption isotherm steeply rises, i.e., a relative pressure region, in which the capillary condensation occurs, depends on the size (diameter) of the pores. When, for example, the size of the pores is smaller than that of the pores having the adsorption characteristics of Fig. 2, the capillary condensation occurs on a relative pressure side lower than 0.3, and the amount of adsorption begins to increase (single-dashed line of Fig. 2). When the size of the pores is larger than that of the above pores on the contrary, the capillary condensation occurs on a relative pressure side higher than 0.3, and the amount of adsorption begins to increase (dotted line of Fig. 2). In general, although the adsorption characteristics outstandingly depend on a relative pressure region in which the capillary condensation occurs, the relation therebetween can be shown by the following Kelvin Expression (1). The Expression (1) shows the relation between both of them when a relative pressure (equilibrium pressure) at the time when the capillary condensation occurs is shown by $P/P_0$.

<u>Expression (1)</u>

$$P / P_0 = e^{-\frac{2 V_1 \gamma \cos \theta}{r R T}}$$

$$....(1).$$

In the Expression (1), $V_1$ shows a condensed molecule volume, $\gamma$ shows surface tension, $\theta$ shows an angle of contact with a capillary tube, R shows a gas constant (8.31 J/mol·K), T shows an absolute temperature, and r shows a pore radius. Since the relation is also established in water vapor, the radius r of pores, which is necessary to cause the capillary condensation of the water vapor to occur at a certain relative pressure $P/P_0$, can be theoretically determined by the relation.

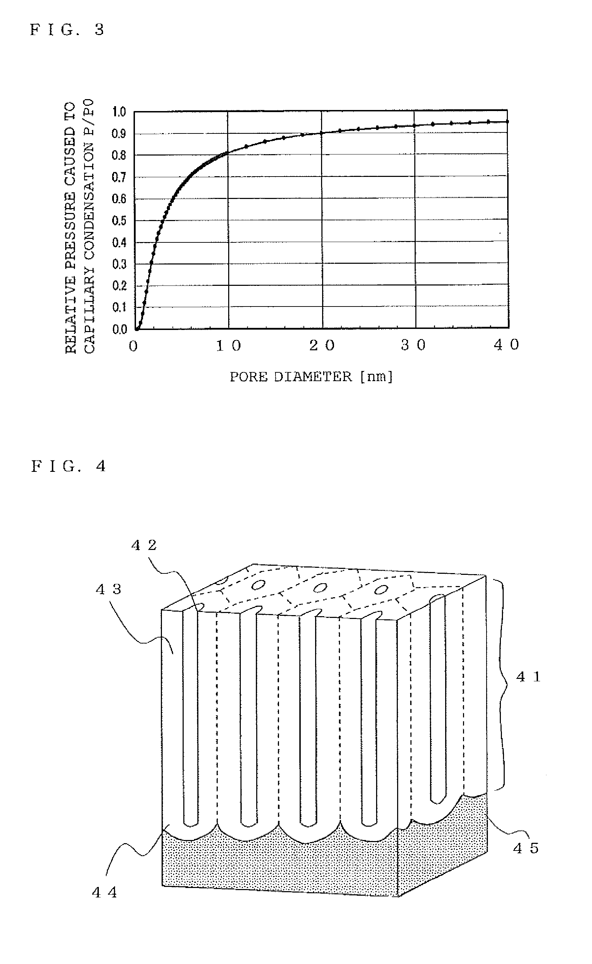

Fig. 3 is a view showing the relation between relative pressure of water vapor at 25 °C and a pore diameter (pore size) which causes the capillary condensation to occur. A horizontal axis shows a pore diameter [nm (nanometer)], and a vertical axis shows a relative pressure of water vapor at which the capillary condensation occurs at 25 °C, i.e., a relative humidity in which the capillary condensation occurs at 25 °C. It can be found from Fig. 2 that at 25 °C, for example, a pore diameter, in which the capillary condensation occurs in an environment in which water vapor has a relative pressure of 0.5 (relative humidity of 50 % RH), is about 3 nm (a radius is about 1.5 nm) and a pore diameter, in which the capillary condensation occurs in an environment in which water vapor has a relative pressure of 0.8 (relative humidity of 80 % RH), is about 9 nm (a radius is about 4.5 nm).

Inversely, to obtain a large amount of adsorption making use of the capillary condensation that occurs in the pores in a target environment, it is sufficient to execute a control for forming a lot of pores having a size in which the capillary condensation occurs under a relative pressure in the environment. Specifically, the control is executed so that pores are formed within the range of an average diameter of, for example, 1 nm to 20 nm. Further, it is preferable that 50 % or more of pores have diameters distributed within the range of $\pm 2$ nm of the average diameter thereof.

Next, specific sizes of pores to be determined and the distribution of the sizes will be described. When the pore size is made unnecessarily smaller, a total amount of adsorption is reduced because the inside volume of the pores acting as capillaries is reduced, although the capillary condensation occurs. In addition to the above-mentioned, when the pore size is reduced, an interaction of water vapor with pore walls is increased and the water vapor is strongly adsorbed with a result that a large amount of energy is necessary to desorb it. From what has been described above, it can be said that there exists a pore size which is most suitable for the relative pressure of water vapor in the target environment.

When, for example, pores have a diameter of 1 nm or less, the capillary condensation may occur even in an environment in which water vapor has a relative pressure of 0.1 or more. In this case, however, not only a sufficient amount of adsorption cannot be obtained because a pore volume is small but also a large amount of desorbing energy, which is as large as that of zeolite, is necessary because an interaction with pore walls is made strong.

In contrast, in a pore diameter of 20 nm or more, the capillary condensation does not occur unless the relative pressure of water vapor becomes 0.9 or more, and thus it cannot be said that this is an actually usable environment. Further, as can be found also in Fig. 2, since the pore size less depends on the relative pressure of water vapor in a relative pressure region in which the water vapor has a relative pressure of 0.9 or more, it is meaningless to strictly and uniformly control the pore diameter, (to form a plurality of pores having same diameter as far as possible).

From what has been explained above, the diameter of the pores formed in the metal fins 20 of the heat exchanger 10 according to the present invention has a feature in that it is set within the range of 1 nm to 10 nm so that the capillary condensation occurs when water vapor has a relative pressure in the range of 0.3 to 0.8 (relative humidity is 30 % RH to 80 % RH).

Further, the relative pressure of water vapor under which the capillary condensation occurs is different depending on the pore size as described above. Accordingly, when, for example, pores having various sizes mixedly exist on the same heat transfer surface, a sufficient adsorbing performance cannot be exhibited because the pores, having a size by which an excellent adsorption capability can be obtained in the humidity condition and the temperature condition in a particular environment, are reduced. Thus, it is preferable that 50 % or more of the pores disposed in the heat exchanger 10 have a size within the range of about $\pm 2$ nm of the average diameter thereof.

Next, the pore depth will be explained. The amount of water vapor, which can be adsorbed in the pores by the capillary condensation, also depends on the pore depth. Accordingly, the present invention has a feature in that the depth of the pores disposed in the heat exchanger 10 is within the range of 1 $\mu$m to 1000 $\mu$m (1 mm). When, for example, the pore depth is 1 $\mu$m or less, an absolute amount of volume capable of holding a liquid (water) adsorbed by the capillary condensation becomes insufficient. Further, this is not effective because the number of times of adsorption/desorption increases. In contrast, when the pore depth is 1000 $\mu$m or more, it has a depth/diameter ratio of about $10^6$ times or more to the diameter of the nano order pores.

Accordingly, this is not practical because a long time is required to cause water molecules to reach the bottoms of the pores in adsorption and to discharge the water molecules from openings in desorption. Further, when an actual aspect such as a processing time necessary to form pores and the like is further taken into consideration, it is considered preferable to form the pores in the depth of 5 $\mu$m to 200 $\mu$m (more specifically, about 100 $\mu$m).

Further, the present invention has a feature in that all the components of the heat exchanger 10 are made of aluminum. Since all the components including the metal fins 20 are made of the aluminum excellent in a heat transfer property, not only heat can be smoothly transferred from the heat exchanger 10 to the pores but also a lot of pores having a similar diameter and a similar depth can be formed by executing an anodizing process to be described later so that pores having a uniform pore structure can easily be obtained.

Further, a method of assembling the heat exchanger 10 by forming the pores on both the surfaces of the metal fins 20 and thereafter inserting the heat transfer tubes 30 into through-holes of the metal fins 20 and expanding them may be employed. Before assembling the heat exchanger 10, the metal fins 20 are subjected to a process of removing surface oxides by an acid process, an anodizing process using the metal fins 20 as anodes, and a heat treatment process to prevent the pores of the metal fins 20, which are subjected to the anodizing process, from being closed.

Here, the anodizing process for forming nano order pores uniformly at a less expensive cost under an excellent control will be explained.

In a method employing the anodizing process, a direct current electrolyte operation is executed in an electrolyte solution (hereinafter, called an electrolyte) using a to-be-processed-metal as an anode and insoluble electrodes as cathodes. When power is supplied, the surface of the metal as the anode is oxidized, and the metal is partly ionized and dissolved in the electrolyte. The metal ions react with water in the electrolyte and create a metal oxide. The metal surface obtained by the anodizing process changes depending on an electron conductivity of the metal oxide.

In particular, in metals referred to as so-called valve metals such as aluminum, niobium and tantalum, since an oxide film formed by these metals has an insufficient electron conductivity, a metal oxide (anode oxide film, alumina in aluminum) is grown on a base metal as the anodizing process proceeds. At the time, when conditions such as an appropriate electrolyte solution (hereinafter, called electrolyte) and an appropriate current and/or voltage are selected, a regularly grown pore structure can be formed.

Fig. 4 is a schematic view of a sectional structure of pores formed by the anodizing process. An anode oxide film 41 is formed on a surface by the anodizing process. The anode oxide film 41 is grown vertically to the base metal 45, is composed of a porous layer portion 43 in which pores 42 are formed and a barrier layer portion 44 in contact with the metal, and has a pore structure of hexagonal cells.

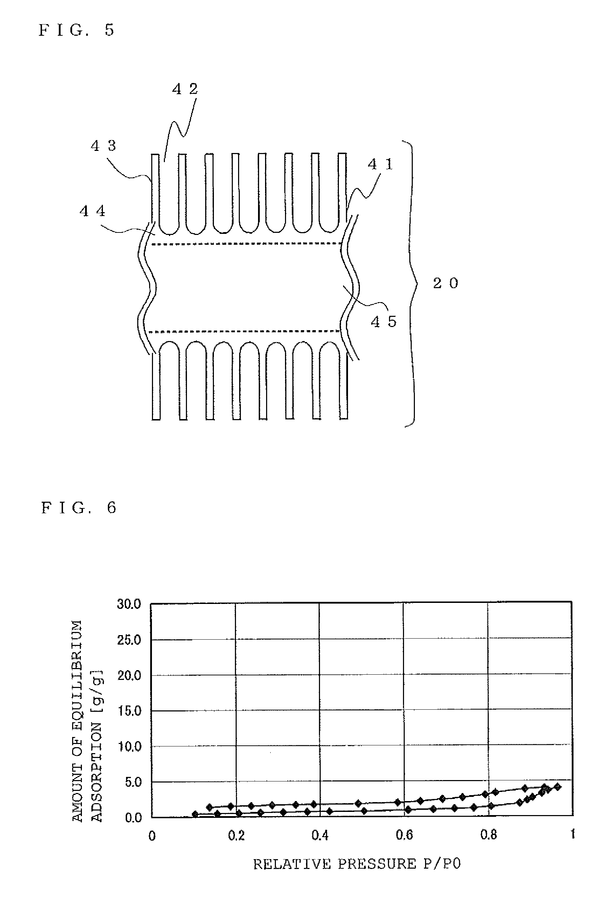

Fig. 5 is a schematic view of a sectional structure of a metal fin 20 having the pores formed on both the surfaces thereof. When pores are formed to fin plates acting as the metal 20 by the anodizing process, it is known by experience that the diameter of the pores, the number of the pores per unit area, and a pore diameter are in proportion to a voltage and/or a current between electrodes. As an example, Electrochemical Handbook, fifth edition (edited by The Electrochemical Society of Japan, Maruzen) p. 449 to 453 shows the relation between a pore diameter 2r [nm] and a voltage Ea [V] between electrodes as shown by the following

Expression (2).

$$\text{when voltage } Ea < 15V, \quad 2r = 13.9 + 0.21 \times Ea$$
$$\text{when voltage } Ea > 15V, \quad 2r = 4.2 + 0.84 \times Ea \quad \dots(2).$$

Since the Expression (2) is obtained by experience, it is not necessarily applied to all the anodizing processes. Further, since the pore diameter is affected by a surface state of a metal to be subjected to the anodizing process and a type, a concentration, a liquid temperature, and the like of an electrolyte used in the anodizing process, it is difficult to generalize a condition for determining the pore diameter. However, the expression shows that a control can be executed to form a desired pore diameter by controlling a current and a voltage between electrodes in the anodizing process.

On the other hand, a pore depth can be also controlled by appropriately setting a condition in the anodizing process. When an anode oxide film has an insufficient electron conductivity as in the aluminum described above, an electric field acting as a driving force of anodization is applied to a barrier layer having a higher electron conductivity so that the barrier layer portion is formed to have a constant thickness. Then, the anode oxide film is grown by that oxidation proceeds in an interface between the porous layer portion and the barrier layer portion, i.e., on a bottom of the porous layer. As a result, the pore thickness is increased in proportion to a time of the anodizing process or to an amount of a current applied thereto (an amount of coulomb applied to the film). As described above, it is also possible to form passing-through pores in the metal fins 20 by executing the anodizing process from, for example, both the sides of the thinned fin plates by increasing an anodization time or the applied current.

To obtain a pore diameter and a pore depth which are most appropriate to the relative pressure of water vapor to be adsorbed, the present invention can control the pore diameter by changing the current or the voltage of the anodizing process and control the pore depth by changing the time of the anodizing process or the amount of the current flowing between the electrodes (by which an amount of coulomb (current $\times$ time) is changed).

Ordinarily, an acid solution of sulfuric acid, oxalic acid, phosphoric acid, chromic acid, or the like, a neutral solution such as ammonium borate, an alkaline solution of sodium hydroxide, sodium phosphate, or the like are used as the electrolyte used for the anodizing process. An acid aqueous solution is preferably used, and, in particular, sulfuric acid and hydrochloric acid as a strong acid are preferably used as the electrolyte of the anodizing process to form nano-order-size pores having a relatively uniform pore diameter. In contrast, when a neutral electrolyte or an alkaline electrolyte is used, there is a tendency that the diameters of the pores, which are formed using the electrolyte, are distributed in a wide range in comparison with the case of using the acid aqueous solution. However, since it is sufficient that a pore structure, which matches an environment in which the heat exchanger of the present invention is used, can be obtained as a result, the type of an electrolyte used for the anodizing process is appropriately selected according to a way of use.

Further, after pores are formed by the anodizing process, they are subjected to a heat treatment at once at 100 °C, which is an evaporation temperature of water, or more (more preferably, about 150 °C or more) to thereby remove water, so that the nano order pores formed by the anodizing process are not denaturalized and clogged. Although the pores obtained by the anodization are in an unstable state from a view point of crystallography, the crystallinity of the pores can be improved and the pore structure can be stabilized by subjecting the pores having been subjected to the anodization to the heat treatment at an appropriate temperature. Further, when the heat treatment is executed, the anode oxide film is changed to a stable crystal structure such as a high-order oxide, for example, aluminum oxide ($Al_2O_3$), and a crystal structure can be improved.

In contrast, when fins 20, in which the pores were formed, were dried in the environment of a room temperature, as they were without being subjected to the heat treatment after the anodizing process, and the pores were formed under the same condition as that of the Embodiment 1 except the above treatment, an adsorption isotherm of the metal fins 20 as shown in Fig. 6 was obtained. Since a pretreatment condition, an evaluation apparatus, and a measurement method are the same as those in the case of the adsorption characteristics evaluation executed in the Embodiment 1, explanation thereof is omitted. Fig. 6 shows a gentle isotherm of an amount of adsorption which does not steeply rise (fall) in both adsorption and in desorption, although hysteresis exists in adsorption and desorption.

As a result, an amount of adsorption of moisture was 4 $cm^3$/g (amount of adsorption of 4 g per apparent unit weight of pores) or less and was not almost observed. Further, a distribution of pores could not be calculated by the BJH method because an amount of adsorption was too small in the measurement of adsorption. From the fact that adsorption of moisture was not almost perceived as described above, it is considered that since no heat treatment was executed after the anodizing process a hydroxide, which was gradually created by reacting with moisture in air, clogged the pores. From what has been described above, in the heat exchanger in which the pores are formed, it is preferable to execute a clog prevention process, by, for example, the heat treatment before the formed pores are clogged.

Next, there will be explained a necessary condition of the pores in which the capillary condensation occurs according to the relative pressure of water vapor in a specific environment to which the heat exchanger 10 is exposed, and water can be sufficiently adsorbed.

The heat exchanger 10, that is, cold/heat equipment for controlling a temperature and a humidity by a refrigerating cycle is used in various locations. For example, it is known that the relative pressure of water vapor is 0.3 to 0.6 at 25 °C in a living space in which persons ordinarily live. Recently, since Building Management Law was established and a temperature: 17 °C to 28 °C and a relative humidity of 40 to 70 % RH (a relative pressure of water vapor: 0.4 to 0.7) were set as references, an importance of a temperature humidity management is more increased.

Further, a factory and the like, which execute food processing, set management values of a low temperature and a low humidity (for example, 5 °C, 30 % RH or less, and the like) according to foods to be treated as mold proofing and a countermeasure against germs from the view point of HACCP (Hazard Analysis and Critical Control Point). Further, many museums and the like set a temperature in display rooms to a constant value of 20 to 22 °C and a relative humidity therein to a constant value of 50 % to 55 %, to suppress expansion/contraction of display items due to an abrupt temperature change and to suppress activities of molds which abruptly increase in a humidity environment of 60 % RH or more.

As described above, since the heat exchanger 10 is used in various temperature/humidity conditions in the environment, there are required a pore structure having a pore diameter and a pore depth which correspond to respective environments of use in order to form pores on the heat transfer surfaces of the heat exchanger 10 and to cause the pores to adsorb and desorb water vapor.

For example, there is considered a case in which the heat exchanger 10 of an air conditioner located in a living space is exposed to the environment of 0.5 (relative humidity: 50 % RH) which is within the above relative pressure. To cause the capillary condensation to occur in the pores formed in the heat exchanger 10, a pore size having a pore radius of about 1.5 nm, i.e., a pore diameter of about 3.0 nm is necessary from the Expression (1). In a space of a food processing factory and the like in which a low humidity environment of 30 % RH or less is required, a pore size having a pore radius of about 1.0 nm, i.e., a pore diameter of about 2.0 nm is necessary from the Expression (1) likewise.

Further, a total amount of adsorption capable of adsorbing water vapor is greatly different depending on a humidity region in which the heat exchanger 10 is used. For example, in the living space in which the persons live as described above, it is estimated that when water vapor can be adsorbed at a speed of about 100 to 200 g (water vapor) /h, a dehumidifying effect can be obtained. That is, to realize dehumidification by the capillary condensation, it is sufficient to adsorb water vapor of about 100 to 200 g (water vapor) from air by one pass. A total amount of adsorption of entire moisture (water vapor) is also determined by the pore depth.

For example, when cold/heat equipment of one-horse power size is considered, the metal fins 20 of the heat exchanger 10 used in the cold/heat equipment have a surface area of about 4 m$^2$. For example, when pores having a size of about 3.0 nm adsorb the above amount of moisture (water vapor) by one pass, a pore depth of about 25 to 50 $\mu$m is necessary. It is sufficient to select a pore structure according to an environment to be used as described above. Respective embodiments will be explained below.

Embodiment 1

An Embodiment 1 will explain a method of forming a pore structure, which satisfies the necessary condition of pores described above (pore diameter: 3.0 nm, pore depth: 50 $\mu$m), on fin plates and forming the metal fins 20 of the heat exchanger 10 and an arrangement and a manufacturing method of the heat exchanger 10 obtained by causing the heat transfer tubes 30 to pass through the through-holes of the metal fins 20 with the formed pores and expanding the tubes.

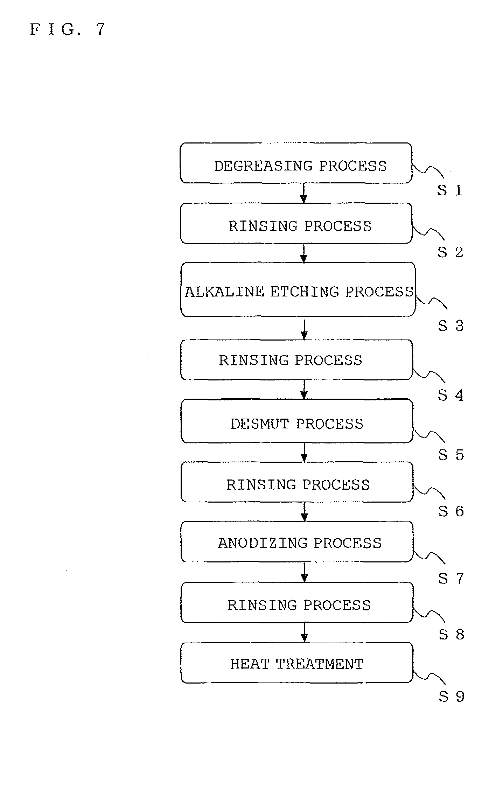

Fig. 7 is a view showing an example of a process flowchart of processing steps to form the pores on the fin plates. Here, steps executed will be explained mainly as to the processing steps of Fig. 7. First, a pure aluminium rolled sheet (for example, a grade of JIS1060 thickness of 200 $\mu$m) as a raw material is cut to a size used as the metal fins 20 and subjected to a process for forming through holes for allowing the heat transfer tubes 30 to pass therethrough and to a predetermined cutting/rising process so that flat fin plates for the metal fins 20 are produced. Ordinarily, several hundreds of the fin plates are necessary to one set of the heat exchanger 10 although this depends on a size and a capability of the heat exchanger 10.

Next, a degreasing process is executed (S1) by dipping the fin plates in a commercially available degreasing solution heated to 50 °C, for, for example, two minutes to remove organic pollution existing on the surfaces of the fin plate aluminum. Thereafter, a water rinsing process (S2) is executed using ion exchange water. Subsequently, the fin plate is subjected to an alkaline etching (wet etching) process (S3) by being dipped in an alkaline etching solution (for example, NaOH (sodium hydroxide) aqueous solution and the like having a concentration of 1 M (mol/l)) heated to about 60 °C for one minute to remove natural oxide films formed on the surfaces of the fin plates.

Thereafter, the water rinsing process is executed using the ion exchange water (S4). Next, a desmut process is executed (S5) by dipping the fin plates in a desmut solution (0.5 M-$H_2SO_4$ (sulfuric acid) solution) managed at a room temperature for 30 seconds, so as to remove (desmut) reactants (impurities, smut) produced on the surfaces by the wet etching. Thereafter, the water rinsing process is executed using the ion exchange water likewise (S6).

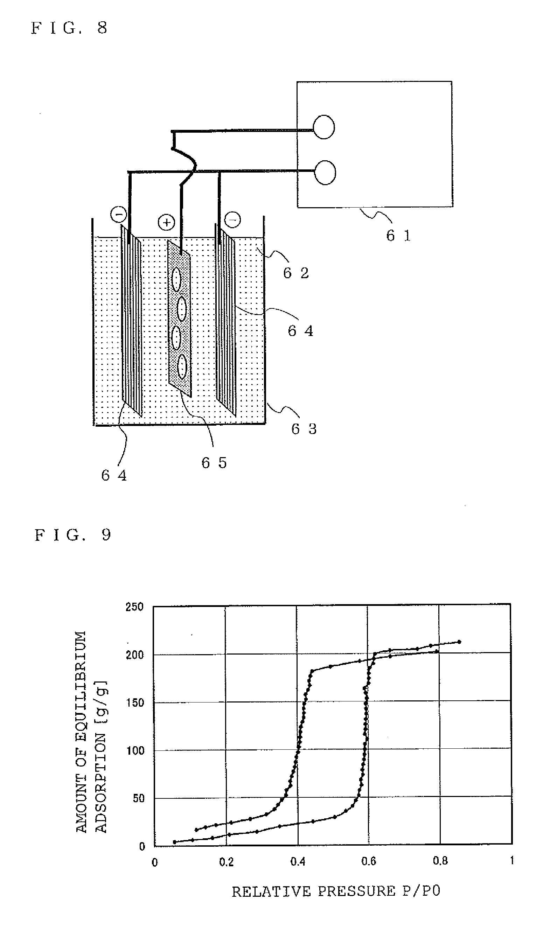

Fig. 8 is a principle view mainly showing a device for executing an anodizing process. In Fig. 8, an electrolyte bath (water bath) 63 was filled with an electrolyte 62 of 1 M-$H_2SO_4$ aqueous solution. After a bath temperature is controlled to 10 °C by the electrolyte bath 63, the electrolyte bath 63 is connected to a direct current power supply 61, one fin plate 65, to which a voltage is applied and which acts as an anode, and two flat carbon sheets 64, which acts cathodes, are dipped in the electrolyte 62. Then, the anodizing process was executed (S7) while executing a constant current control so that a constant current of 1.5 A/dm$^2$ flow between both the electrodes.

It is assumed here that anodization is started by a hot start (a voltage is previously applied between both the electrodes and a current flows as soon as the fin plate is dipped) to keep a surface state of an initial reaction. An anodizing process time is set to 30 minutes. Since the process is executed in such a manner that the carbon sheets 64 confronted with flat portions of the fin plate 65 disposed therebetween, the anodization proceeded to both the surfaces of the fin plate 65 at the same time. Note that the Embodiment 1 describes the anodizing process executed by letting the constant current flow the constant current control.

However, since it is sufficient in the anodizing process to apply energy, necessary to reaction to the anode, that is, as it is sufficient to apply a predetermined amount of electricity as described above, it is apparent that a similar effect of the anodizing process can be also obtained even by a constant voltage control to control a voltage applied to the anode to be constant.

Further, although the bath temperature is controlled to the constant temperature of 10 °C using the water bath, since an activation and a speed of a chemical reaction such as dissolution, oxidation, and the like are greatly affected by a temperature, it is sufficient to control a temperature according to a necessary size and depth of pores. For example, it is sufficient to lower the bath temperature to obtain small and shallow pores by suppressing the reaction and to increase the bath temperature to obtain large and deep pores by accelerating the reaction on the contrary.

It is preferable that as many as possible of the thus formed pores have a similar diameter (uniform diameter) as described above. For this purpose, countermeasures such as making the current density of the fin plate 65 uniform in its entirety are executed. Thus, for example, the size of the carbon sheets 64 is made as large as or larger than that of the fin plate 65, and the reaction is made to occur uniformly by suppressing vibration of the electrolyte 62 and the like. Further, to anodize both the surfaces of the fin plate 65 in the same condition, the distances between the fin plate 65 and the two carbon sheets 64 are set to the same distances. An auxiliary electrode may be used when necessary so that the fin plate 65 can be anonized in its entirety according to the shape thereof in the same condition.

As the anodization proceeds, oxides (anode oxide films) are grown on the surfaces of the fin plate 65 to thereby increase an interface resistance. Since the constant current control is executed in the anodizing process of the Embodiment 1 described above, the voltage between both the electrodes gradually increases.

On the completion of the anodizing process, the fin plate is pulled up from the electrolyte 62 and subjected to the water rinsing process with the ion exchange water (S8). After water droplets deposited on the surfaces of the fin plate are blown off by a blower, the fin plate is immediately put into an oven (into the atmosphere) which was previously heated, to reinforce the structure of the pores formed by the anodization. The temperature in the oven is set to about 150 °C. After the fin plate is subjected to a heat treatment for 60 minutes, it is taken out from the oven and gradually cooled (S9). 120 sheets, for example, of the fin plates, in which pores are formed on portions acting as heat transfer surfaces are prepared as the metal fins 20.

Fig. 9 is a view showing an adsorption isotherm of the metal fins 20 produced in the Embodiment 1. Fig. 9 evaluates the water adsorption characteristics and a distribution of the pore sizes of the pores formed on the metal fins 20 by an equilibrium adsorption measurement.

First, for example, a fin plate, which is the same as the metal fin 20, was cut into pieces with an appropriate size, and packed into a sample tube. After they were subjected to a pretreatment in vacuum at 150 °C for one hour, an adsorption isotherm of moisture at 25 °C was measured using an automatic gas/vapor adsorption amount measurement device. It can be found from Fig. 9 that moisture is adsorbed and desorbed by the capillary condensation from the portion of the vicinity of a relative pressure $P/P_0$ of 0.5 as a boundary where a steep rising (falling) is observed in an average adsorption/desorption, although hysteresis exists in adsorption and desorption. Note that the thus formed pores have a depth of about 50 $\mu$m which is an initial target depth. Further, it can be found that the amount of adsorption of moisture obtained at the time is about 200 g per unit weight of the pore and exhibits sufficient adsorption characteristics.

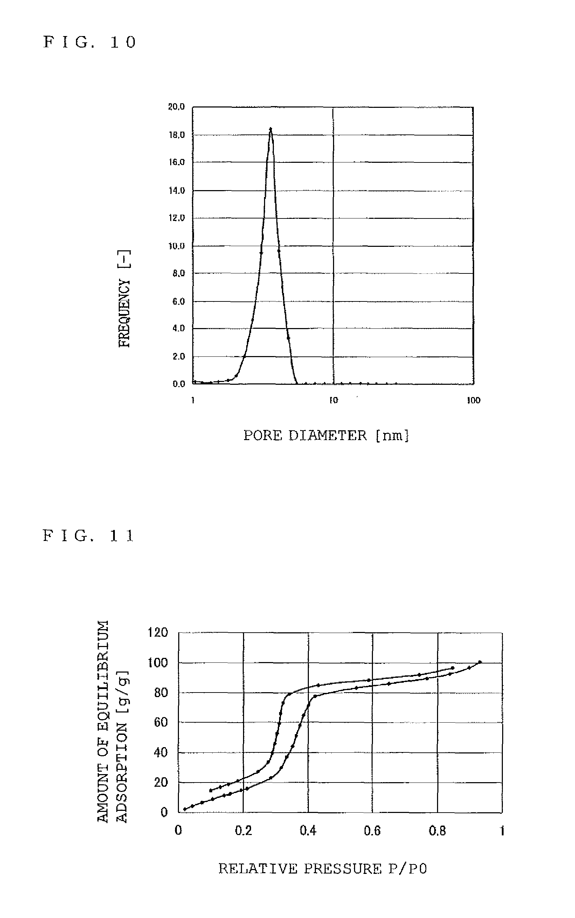

Fig. 10 is a view showing a distribution of pore sizes. In Fig. 10, the pore sizes of a sample, which exhibits the capillary condensation in the vicinity of a relative pressure of 0.5, are determined by the BJH (Barrett-Joyner-Halenda) method. Since the distribution of the pore sizes is maximized in the vicinity of 3.5 nm and a steep pore distribution peak is obtained, it can be confirmed from Fig. 10 in that 50 % or more of the pores are included within the range of a pore diameter of 3.5 nm $\pm$ 2 nm.

Subsequently, 120 sheets of the metal fins 20 having the adsorption characteristics are arranged in, for example, two stages × three columns, and the copper heat transfer tubes 30, through which a refrigerant flows, are inserted into the through holes of the metal fins 20 stacked in the same direction. Further, the heat transfer tubes 30 are expanded from inside so that the metal fins 20 are integrated with the heat transfer tubes 30.

At the time, it is assumed that the thus arranged metal fins 20 are disposed at equal intervals. Further, to connect the heat transfer tubes 30 in series (to be continuous), the hair pin tubes 31, which are formed by bending copper tubes in a hair-pin-shape, are prepared, and after the heat transfer tubes 30 are filled with nitrogen gas, the terminal ends of two heat transfer tubes 30 to be connected are welded to a hair pin tube 31. The heat exchanger 10 as shown in Fig. 1 can be obtained as described above.

As described above, since the pores are formed on surfaces of the fin plates constituting the metal fins 20 acting as the heat transfer surfaces of the heat exchanger 10, and the metal fins 20 themselves are caused to act as a means for adsorbing moisture, moisture can be adsorbed from air passing between the metal fins 20 without the necessity of a special means such as powder-like adsorbing materials, for example, silica gel and the like.

With this arrangement, since the heat exchanger 10 including the metal fins 20 can be prevented from being frosted, a frequency of a dehumidification operation can be reduced. Since exfoliation and the like of the adsorbing materials can be prevented, the arrangement is also safe from the viewpoint of sanitation and the like and can be easily managed. Further, since no heat resistance exists between the metal fins 20 and the adsorbing materials, a heat transfer effect is not deteriorated.

Since the intervals between the metal fins 20 of the heat exchanger 10 are not reduced by the adsorbing materials and the like to thereby improve an air flow between the metal fins 20 and further the surface area of the heat transfer surface is increased by the pores formed in a concave/convex shape, heat exchange can be more efficiently executed.

Further, since pressure loss of air and the like is not caused by the adsorbing materials, the heat exchange can be efficiently executed from the view point of energy. Further, the heat exchanger 10 can be made compact in its entirety because it is not necessary to dispose the adsorbing materials.

The pores are formed to have an average diameter of about 1 nm to about 20 nm (in particular, about 1 nm to about 10 nm) so that moisture can be adsorbed and desorbed within the predetermined range of the relative pressure of water vapor of about 0.1 to about 0.9 (in particular, about 0.3 to about 0.8), the pores of about 50 % or more are formed so that the diameters thereof are distributed within the range of about ±2 nm of the average diameter thereof, and further, the pore structure is formed to have a depth in conformity with a desired amount of adsorption, specifically within the range of a pore depth of 1 μm to 200 μm. As a result, the heat exchanger 10 (the metal fins 20) having a highest adsorption capability in the vicinity of the relative pressure in an environment, can be obtained.

More particularly, in the Embodiment 1, the fin plate is subjected to the anodizing process by being dipped in the anodization electrolyte of the 1 M-$H_2SO_4$ aqueous solution so that the capillary condensation occurs according to the environment of the relative pressure of water vapor to which the heat exchanger 10 in the air conditioning equipment located in the living space is exposed, the pores of about 50 %, for example, are formed to have the diameter within range of about 3.5 nm ±2 nm in, the metal fins 20 (the heat exchanger 10), and the deep pores are formed in conformity with the amount of adsorption so that the pores can be thermally directly cooled by the refrigerant.

As a result, the heat exchanger 10, in which the adsorption characteristics are improved in the vicinity of a relative pressure of 0.5, can be obtained as shown in adsorption characteristics of Fig. 9. Further, since the arrangement has desorption characteristics as shown in Fig. 9 likewise, the pores directly formed on the metal fins 20 can be directly heated by causing the refrigerant having a high temperature to pass through the heat transfer tubes 30 during desorption. As a result, there can be obtained the heat exchanger 10 which can efficiently increase the relative pressure and efficiently desorb the water vapor adsorbed in the pores and has an excellent heat transfer efficiency and an excellent energy-saving property.

Embodiment 2

As described above, a factory and the like, which execute food processing, set management values of a temperature and a humidity to values lower than those in an ordinary environment (to, for example, 5 °C, 20 % RH and the like) as mold proofing and a countermeasure against germs from the view point of sanitation. Thus, in an Embodiment 2, a heat exchanger 10, which is most preferable in the low-temperature/low humidity environment, is manufactured.

As described above, when the heat exchanger 10 having pores is exposed to an environment having the relative pressure of water vapor of about 0.3 (relative humidity: 30 % RH), it is predicted that most excellent adsorption characteristics can be obtained when the pores have a pore radius of about 1.0 nm, i.e., a pore diameter of about 2.0 nm. Further, since an absolute amount of moisture in air is not so large in the low-temperature/low humidity environment, it is considered sufficient to absorb moisture at a speed of about 50 to 100 g (water vapor)/h. From what has been described above, it is predicted that a pore depth of about 50 to 75 μm is necessary in the environment.

Based on the above prediction and the like, pores were formed to fin plates by the process shown in Fig. 7 also in this embodiment likewise the Embodiment 1. However, in the embodiment, a condition, in which an anodizing process is executed, is different as described later. First, degreasing, alkaline etching, and a desmut process are executed in this order (S1 to S6 of Fig. 7) using the same condition and the same solution as those in the Embodiment 1.

Next, the anodizing process was executed using the electrolyte bath 63 and the like shown in Fig. 8 (S7 of Fig. 7). In the embodiment, 0.5 M-$H_2SO_4$ aqueous solution whose bath temperature is controlled to 20 °C is used as an electrolyte. Then, one fin plate as an anode and two carbon sheets as cathodes are dipped in the electrolyte and processed by executing a constant current control so that a constant current of, for example, 2.0 A/dm$^2$ flows between both the electrodes. An anodizing process time is set to forty five minutes. Note that although the embodiment exemplifies an example for forming the pores by executing the constant current control using sulfuric acid, the acid electrolyte is not limited to the sulfuric acid as long as predetermined pores can be obtained, and further a control method may be a constant voltage control in place of the constant current control.

On the completion of the anodizing process, the fin plate is pulled up from the electrolyte and rinsed with ion exchange water, and water is removed therefrom by a blower. Then, the fin plate is put at once into an oven (into the atmosphere) heated to 150 °C, subjected to a heat treatment in this state for 60 minutes, then taken out from the oven, and gradually cooled likewise the Embodiment 1 (S8 to S9 of Fig. 7). For example, 200 sheets of the metal fins 20 in which pores are formed on the heat transfer surfaces are prepared.

Fig. 11 is a view showing an adsorption isotherm of the metal fins 20 produced in the Embodiment 2. Since a pretreatment condition, an evaluation apparatus, and a measurement method are the same as those in the adsorption characteristics evaluation executed in the Embodiment 1, explanation thereof is omitted. In Fig. 11, although hysteresis exists in adsorption and desorption, a steep rising (falling) is observed in the vicinity of 0.3 of the relative pressure $P/P_0$ in the average of adsorption and desorption. Further, it can be found that the amount of adsorption of water obtained at the time is about 70 g per unit weight of the pore which depends on a pore diameter and a pore depth and exhibits sufficient adsorption characteristics. The thus formed pore depth is about 70 $\mu$m.

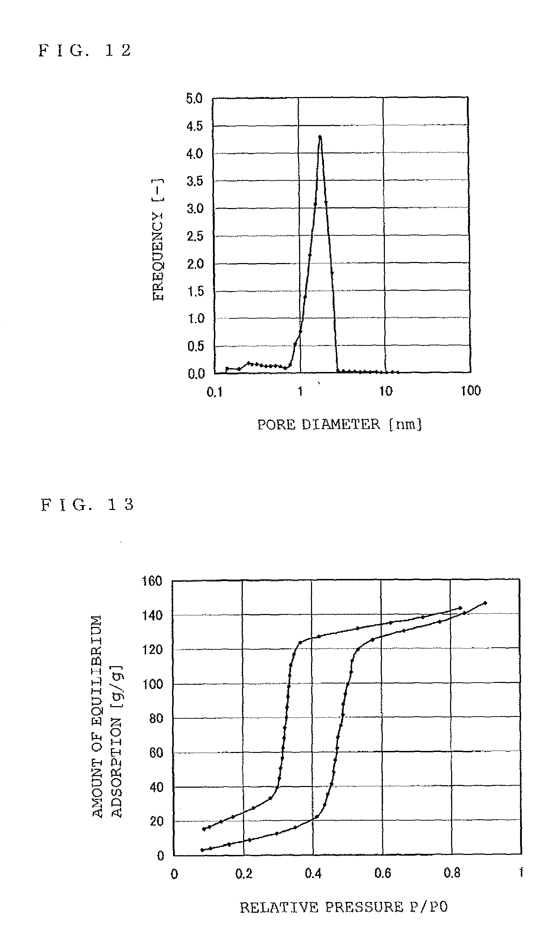

Fig. 12 is a view showing a distribution of pore sizes. In Fig. 12, the pore sizes of a sample, which exhibits the capillary condensation in the vicinity of the relative pressure of 0.3, are determined by the BJH method. Since the distribution of the pore sizes is maximized in the vicinity of 1.8 nm and a steep pore distribution peak is obtained, it can be confirmed from Fig. 12 that 50 % or more of the pores are included within the range of a pore diameter of 1.8 nm $\pm$ 2 nm.

Next, the 300 metal fins 20 having the adsorption characteristics were arranged in three stages $\times$ four columns, and the heat exchanger 10 having pores on heat transfer surfaces was manufactured by the same method as that of the Embodiment 1.

As described above, the same effect as that of the Embodiment 1 can be also obtained in the heat exchanger 10 of the Embodiment 2. In particular, in the Embodiment 2, the anodizing process is executed by dipping the fin plate in the anodization electrolyte of the 0.5 M-$H_2SO_4$ aqueous solution, the pores are formed so that the diameters of about 50 % of the pores are included in the range of about 1.8 nm $\pm$2 nm, for example, in the respective metal fins 20 (heat exchanger 10), and the pores are formed in conformity with the amount of adsorption so that the heat exchanger 10, which is most preferable in a low temperature/low humidity environment of a factory and the like in which foods are treated. As a result, the pores can be thermally efficiently cooled directly by a refrigerant.

Embodiment 3

An arrangement of a heat exchanger 10 in an Embodiment 3 is the same as that of each embodiment described above. However, aluminum having a good heat transmission property and capable of being subjected to an anodizing process is used as a material of heat transfer tubes 30 (includes hair-pin tube 31) like metal fins 20 so that the heat exchanger is composed of aluminum in its entirety. Then, pores are formed not only on the metal fins 20 but also on the heat transfer tubes 30 (the hair-pin tube 31).

The heat exchanger 10 is assembled by a method similar to an ordinary method. For example, 160 pieces of the metal fins 20 were arranged in three stages $\times$ four columns, and the heat transfer tubes 30 were inserted into through-holes of the metal fins 20. Further, the heat transfer tubes 30 are expanded from inside so that the metal fins 20 are integrated with the heat transfer tubes 30. Further, a plurality of the heat transfer tubes 30 are connected by the hair pin tubes 31. With this arrangement, the all-aluminum heat exchanger 10 was prepared.

The openings of both the terminal ends of the heat transfer tubes 30, which are connected to other equipment of a refrigerating cycle apparatus, are masked with, for example, a fluororesin tape composed of PTFE (polytetra fluoro-oethylene) to prevent an electrolyte from entering into the heat transfer tubes 30 from the ends thereof at the time when they are dipped in the electrolyte.

With this arrangement, since the insides of the tubes are prevented from being subjected to anodization, an increase of a flow path resistance of a refrigerant caused by, for example, an anode oxide film can be prevented. Thereafter, the pores are formed to the heat exchanger 10 by the process flow shown in Fig. 7 like the Embodiment 1. First, degreasing, alkaline etching, and a desmut process are executed in this order (S1 to S6 of Fig. 7) using the same condition and the same solution as those of the Embodiment 1.

Next, the anodizing process is executed (S7 of Fig. 7). In this embodiment, the anodizing process described above and shown in Fig. 8 is executed using the entire heat exchanger 10 as an anode in place of fin plates acting as the metal fins 20. Although the entire heat exchanger 10 acted as the anode, a plurality of electrodes were attached at positions symmetrical to a center line of the heat exchanger 10 to reduce variation of current densities. In contrast, flat carbon sheets are used as cathodes like the Embodiments 1 to 3. At the time, four carbon sheets were used and disposed so as to surround the heat exchanger 10.

In this embodiment, the heat exchanger 10 and the carbon sheets 64 are dipped in the electrolyte 62, and a constant current control is executed so that a constant current of 2.0 A/dm$^2$ flows between both the electrodes. An anodizing process time is set to twenty minutes. Note that although the embodiment exemplifies an example for forming the pores by executing the constant current control using sulfuric acid like the Embodiment 1, the acid electrolyte is not limited to the sulfuric acid as long as predetermined pores can be obtained, and further a control method may be a constant voltage control in place of the constant current control.

On the completion of the anodizing process, the heat exchanger 10 is pulled up from the electrolyte and rinsed with ion exchange water, and water is removed therefrom by a blower likewise the Embodiment 1 and the like. Then, the heat exchanger 10 is put into an oven (into the atmosphere) heated to 150 °C at once, subjected to a heat treatment in this state for 60 minutes, then taken out from the oven, and gradually cooled (S8 and S9 of Fig. 7). The heat exchanger 10 having the pores formed in the entire portions thereof is manufactured by forming the pores by the method described above.

In the entire heat exchanger 10 whose assembly has been completed, although the surface thereof is subjected to the anodization, the heat transfer tubes 30 and the metal fins 20 are entirely made of aluminum as the material thereof, and the pores are formed not only on the surfaces of the metal fins 20 but also on the surfaces of the heat transfer tubes 30. This arrangement is advantageous in that since a number of pores is increased, an area in contact with air including water vapor in a target space is increased.

Fig, 13 is a view showing an adsorption isotherm of the heat exchanger 10 produced in the Embodiment 3. Since a pretreatment condition, an evaluation apparatus, and a measurement method are the same as those in the case of the adsorption characteristics evaluation executed in the Embodiment 1, explanation thereof is omitted. In Fig. 13, although hysteresis exists in adsorption and desorption, a steep rising (falling) is observed in the vicinity of 0.40 of the relative pressure $P/P_0$ in the average of adsorption and desorption. Further, it can be found that the amount of adsorption of moisture obtained at the time is about 120 g per unit weight of the pores which depends on a pore diameter and a pore depth, and exhibits sufficient adsorption characteristics. The thus formed pore depth was about 180 $\mu$m.

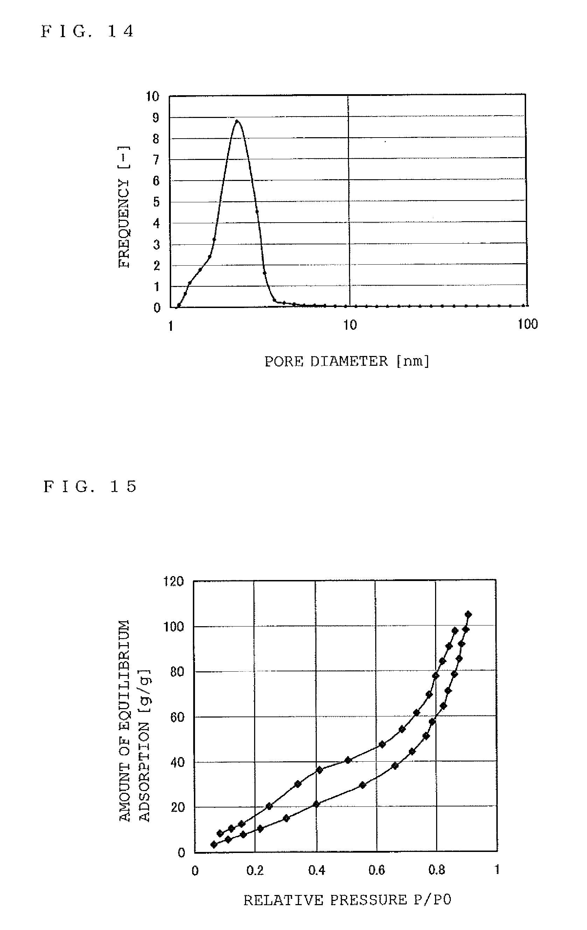

Fig. 14 is a view showing a distribution of pore sizes. In Fig. 14, the pore sizes of a sample, which exhibits the capillary condensation in the vicinity of the relative pressure of 0.4, are determined by the BJH method. Since the distribution of the pore sizes is maximized in the vicinity of 2.5 nm and a steep pore distribution peak is obtained, it can be confirmed from Fig. 14 that 50 % or more of the pores are included within the range of a pore diameter of 2.5 nm ± 2 nm.

As described above, according to the Embodiment 3, not only the metal fins 20 but also the heat transfer tubes 30 and the hair pin tube 31 are composed of aluminum as the material thereof, and the pores are formed also on the heat transfer tubes 30 (the hair pin tube 31) so that they open internally from the surfaces thereof. As a result, since the area of the portions having the pores (the number of pores) can be increased, a larger amount of moisture can be adsorbed without depending on the adjustment of the pore depth.

Embodiment 4

In an Embodiment 4, it is assumed that a 1 M-NaOH aqueous solution which exhibits strong alkaline is used as an electrolyte in an anodizing process, a constant current control is executed so that a constant current of 3 A/dm$^2$ flows, and an anodizing process is executed for 40 minutes. Pores were formed by the same method and the same conditions as those of the above embodiments except the above conditions.

Note that although this embodiment exemplifies an example for forming the pores by executing the constant current control using NaOH, the alkaline electrolyte is not limited to the NaOH as long as predetermined pores can be obtained, and further a control method may be a constant voltage control in place of the constant current control.

Fig. 15 is a view showing an adsorption isotherm of metal fins 20 produced in the Embodiment 4. Since a pretreatment condition, an evaluation apparatus, and a measurement method are the same as those in the case of the adsorption characteristics evaluation executed in the Embodiment 1, explanation thereof is omitted. In the isothermal of Fig. 15, although hysteresis exists in adsorption and desorption, an amount of adsorption (amount of desorption) gently increases (decreases) as a relative pressure increases (decreases) without steeply rising or falling in both adsorption and desorption. The adsorption isotherm having the above shape shows that adsorption and desorption can be executed in a relatively wide humidity range.

Thus, the adsorption isotherm is effective because an average adsorption performance can be obtained in the case when the heat exchanger is used in an environment in which the humidity and the temperature of a target space to which the heat exchanger is exposed change by season and time, and when the heat exchanger is used in a way of use in which the humidities of air, to which the heat exchanger is exposed, are different depending on the portions of the heat exchanger due to the design of an air path.

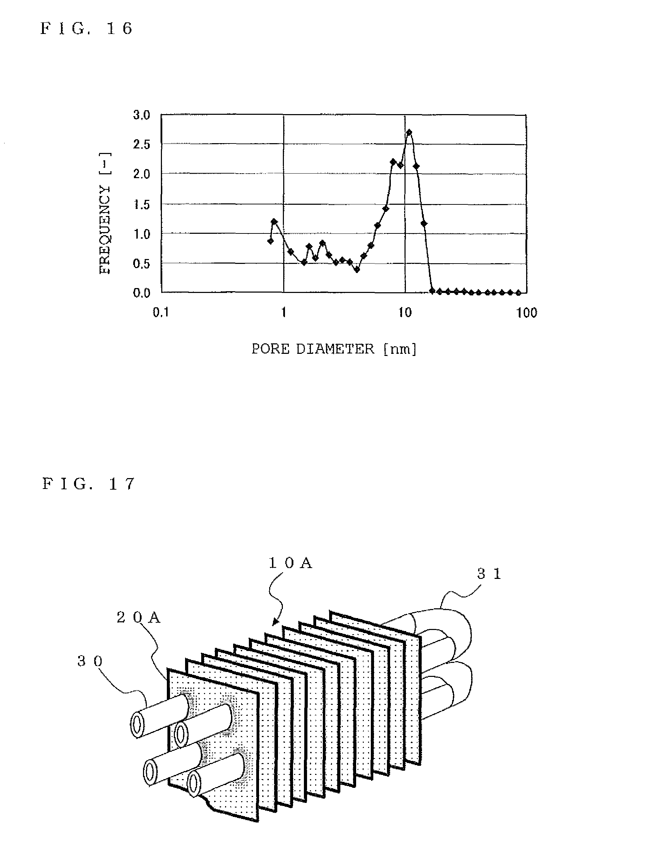

Fig. 16 is a view showing a distribution of pore sizes. In Fig. 16, the pore sizes of a sample, which exhibits the capillary condensation in the vicinity of the relative pressure of 0.3, are determined by the BJH method. In Fig. 16, the pores are large as a whole, and the distribution thereof is maximized in the vicinity of 10 to 11 nm. In contrast, many minute pores of 7 nm or less are observed, and the distribution of the pores has bimodal peak (two peaks) in its entirety. It is considered that since the strong alkali aqueous solution was used as the electrolyte, metal was dissolved earlier than oxidation growth (growth of anode oxide film) of the pore walls of the pores opening from surfaces to insides, and thus a pore diameter was made large as well as the pores were distributed widely.

Embodiment 5

When, for example, a heat exchanger 10 is used outdoors and in a strictly managed environment such as a factory, a scattering of white rusts, which are corroded products of aluminum, becomes a problem. At the same time, since additional functions such as hydrophilic nature, antimicrobe, mold proofing are also required, it is desired to apply any of weather/corrosion resistance processes to the surface of the heat exchanger 10 (the metal fins 20) of the present invention of the respective embodiments described above. Ordinarily, a chemical conversion treatment, which forms a chromic acid compound in a thickness of 1 μm or less, is often used as a surface treatment of aluminum.
When a thick oxide film is formed by the anodizing process as in, for example, the heat exchanger 10 of the present invention, the heat exchanger 10 has a strong corrosion resistance as compared with metal aluminum. However, when the surface of the heat exchanger 10 is strongly corroded, since the shape and the size of pores are also adversely affected thereby, not only the corrosion resistance but also a moisture adsorbing capability are also lowered. To cope with the above problem, in the embodiment, a surface treatment is executed to the surfaces (heat transfer surfaces) of the metal fins 20 after the pores are formed thereon.

At the time, since it is necessary to control the size of the pores formed by anodization to be in a nano order, in order to control the capillary condensation, a surface treatment such as a chromic acid chemical conversion treatment and the like is executed as a weather/corrosion resistance surface treatment effective with a relatively thin layer after forming the pores.

At the time, since the weather/corrosion resistance surface treatment is executed to the surface subjected to the anodizing process, the average diameter of the pores formed on the heat exchanger 10 is set within the range of 1 nm to 20 nm even after the surface treatment is executed in consideration of the thickness of the surface treated layer, as described alone. Further, it is preferable that the diameter of 50 % or more of the pores in all the pores be set to a size within the range of ±2 nm of the average diameter thereof.

Further, the thickness of the thus surface treated layer is taken into consideration also as to a pore depth likewise so that a sufficient amount of adsorption can be obtained. It is necessary to set the pore depth to 1 μm to 1000 μm even in a state after the surface treatment is executed by controlling the pore depth by changing a process time in the anodizing process.

Next, a manufacturing process of the heat exchanger 10 in the embodiment will be explained. The pores are formed on the fin plates by the process flow shown in Fig. 6 like the Embodiment 1 also in this embodiment. First, degreasing, alkaline etching, and a desmut process are executed in this order (S1 to S6 of Fig. 6) using the same condition and the same solution as those in the Embodiment 1.

Next, the anodizing process is executed like Fig. 7 described above (S7 of Fig. 6). Since the thickness of the chromium compound formed by a chromate chemical conversion treatment to be executed later is set to about 100 nm, the size and the depth of the pores formed by the anodization must be determined in consideration of the thickness. In this embodiment, as an example, a 1 M-HCl (hydrochloric acid) aqueous solution is used as an electrolyte in the anodizing process. Then, one fin plate as an anode and two carbon sheets as cathodes are dipped in the electrolyte, a constant current control is executed so that a constant current of 4.5 A/dm$^2$ flows between both the electrodes, and a current value is adjusted so that a pore diameter at the time before the chromic acid chemical conversion treatment is executed is set to about 212 nm.
That is, the chromate chemical conversion treatment of a thickness of 100 nm is executed to the pores having the pore diameter of 212 nm. With this treatment, the pore diameter at the time after the chromic acid chemical conversion treatment is executed becomes about 12 nm. Further, the pore depth is managed by a treatment time which is set to 80 minutes. Note that although the Embodiment 5 exemplifies an example for forming the pores by executing the constant current control using hydrochloric acid, the electrolyte is not limited to the hydrochloric acid as long as predetermined pores can be obtained, and further a control method may be a constant voltage control in place of the constant current control.

On the completion of the anodizing process, the fin plate is pulled up from the electrolyte and rinsed with ion exchange water, and water was removed therefrom by a blower likewise the Embodiment 1 and the like. Then, the fin plate is put at once into an oven (into the atmosphere) heated to 150 °C, subjected to a heat treatment in this state for 60 minutes, then taken out from the oven, and gradually cooled (S8 to S9 of Fig. 6).

Next, in this embodiment, the fin plate subjected to the heat treatment is dipped in a chromate family solution for five seconds. Thereafter, the fin plate was taken out and dried, and a surface treated layer composed of a 100 nm thick chromium oxide is formed on the surfaces of the fin plate by the chromate chemical conversion treatment. With this treatment, the metal fins 20 on which the surface treated layer is formed can be obtained.

The adsorption characteristics of the metal fins 20 after being subjected to the chromic acid chemical conversion treatment were evaluated using a pretreatment condition, an evaluation apparatus, and a measurement method which are the same as those in the adsorption characteristics evaluation executed in the Embodiment 1. When an adsorption isotherm was measured at 25 °C, a steep rising (falling) was observed in the vicinity of a relative pressure $P/P_0$ of 0.5. Further, when a distribution of pore sizes including the surface treated layer was calculated by the BJH method, since the distribution of the pore sizes was maximized in the vicinity of 12.0 nm and a peak of a steep pore distribution was obtained, it could be confirmed that 50 % or more of the pores were included in the range of a pore diameter of 12.0 nm $\pm 2$ nm. A pore depth at the time was about 350 $\mu$m.

Then, the heat exchanger 10 having the pores on the heat transfer surfaces was obtained by the same method as that of the Embodiment 1 by arranging the 200 fin plates having the adsorption characteristics in two stages $\times$ four columns as the metal fins 20.

As described above, according to the Embodiment 5, since the surface treated layer of the chromium compound is formed on and applied to, for example, the aluminum fin plates by the chromic acid chemical conversion treatment (chromate treatment), the weather/corrosion resistance can be improved by preventing corrosion of aluminum. As a result, since a scattering of products made by corrosion can be prevented, a safety aspect and a sanitation aspect can be improved.

Embodiment 6

In the Embodiment 5 described above, the surface treated layer using the chromium compound as a material is formed by the chromic acid chemical conversion treatment. However, chromium compound need not be necessarily used to the surface treated layer. Thus, in this embodiment, corrosion resistance is improved by forming a surface treated layer by fluorine resin.

In a process up to a heat treatment in the embodiment, since pores are formed on fin plates by the process shown in Fig. 6 like the Embodiment 5, explanation thereof is omitted. In this embodiment, a fluorine coating treatment is executed on the surface of the heat exchanger 10 (fin plates) having been subjected to the heat treatment to improve corrosion resistance.

Next, the fluorine coating treatment will be explained. First, metal fins having a pore diameter of about 210 nm are formed by anodization. Next, a primer (ground) layer is formed on the surfaces of the fin plates by a spray coating. An epoxy resin paint, for example, is used as the primer layer, and the primer layer has a film thickness of, for example, 70 nm.

Thereafter, a fluororesin family paint diluted to 5 wt % (weight percentage) is applied on the primer. Here, a fluoroethylene vinyl ether (FEVE) resin is used as the fluororesin family paint, and a fluororesin layer of about 30 nm is applied. Then, fluororesin layer is dried at 170 °C for 15 minutes in a hot air circulating drying furnace and baked in. As a result, fluororesin layers (including the primer layers) having a thickness of about 100 nm (0.1 $\mu$m) are formed on the surfaces of the fin plates.

Although the fluoroethylene vinyl ether (FEVE) resin is used in this embodiment as the fluororesin family paint, the fluororesin family paint is not limited thereto. The same effect can be obtained even if the fluorine family coating treatment is executed using, for example, fluorine family resin such as tetra fluoroethylene or polytetra fluoroethylene (PTFE) as its copolymer, hexafluoropropylene copolymer (FEP), perfluoroalkyl vinyl ether copolymer (PFA), and ethylene-tetrafluoroethylene copolymer (ETFE), as the other fluororesin family paints.

Then, fin plates having subjected to the fluorine coating treatment were arranged in two stages $\times$ four columns as metal fins 20, and the heat exchanger 10 having pores on heat transfer surfaces was obtained by the same method as that of the Embodiment 1.

As described above, according to the Embodiment 6, since the surface treated layer is formed by the fluororesin, weather/corrosion resistance can be improved by preventing corrosion of aluminum, like the Embodiment 5. As a result, since a scattering of products made by corrosion can be prevented, a safety aspect and a sanitation aspect can be improved. Further, since the surface treated layer can be formed without executing the chromic acid chemical conversion treatment as in the Embodiment 5, an environmental operation can be taken by excluding chromium.

Embodiment 7

In the respective embodiments described above, aluminum is used as the material of the metal fins 20 from the view point of a high thermal conductivity and formation of the pores by the anodizing process. In the present invention, however, the material is not limited to aluminum. For example, a so-called valve metal described above may be used as the material of the metal fins 20 and the like, and pores may be formed on the surfaces of the metal fins 20 by the anodizing process.

The valve metal is a generic name of metals such as aluminum, tantalum, niobium, titanium, hafnium, zirconium, zinc, tungsten, bismuth, antimony which can form an oxide film that exhibits an electrolytic rectification action by the anodizing process. Among them, metals, which can be practically used as the metal fins 20, are, for example, aluminum, titanium, zirconium, niobium, tantalum, and the like. Even if these metals are used, the same effect as that of aluminum can be obtained.

Further, the surface treated layer explained in the Embodiments 5 and 6 is not limited to the chromium family compound and the fluorine family resin described above. Corrosion resistance may be improved by forming the surface treated layer of other metals such as nickel, other compounds, and the like.

Embodiment 8

Fig. 17 is a view showing a heat exchanger 10A according to an Embodiment 8 of the present invention. Although not particularly shown in the embodiments described above, heat is not uniformly distributed actually in the heat exchanger 10A, and the distribution is directly affected by the temperature of heat transferred from a refrigerant in the vicinity of heat transfer tubes 30 through which the refrigerant passes. When, for example, water is adsorbed by pores, a refrigerant having a temperature lower than an air temperature flows in the heat transfer tubes 30 (hair-pin tubes 31). When water is desorbed to the contrary, a high temperature refrigerant flows.

Accordingly, a position farther away from the heat transfer tubes 30 has a larger temperature difference to a refrigerant temperature. That is, when the heat exchanger 10A is examined in more detail, a temperature (environment) is different depending on the positions of metal fins 20A of the heat exchanger 10A. As a result, the relative pressure of water vapor in the metal fins 20A is different depending on a position.

Specifically, in the metal fins 20A, such a change is brought about that as a position is farther away from the heat transfer tubes 30 through which the refrigerant passes, a relative pressure in adsorption is more lowered and a relative pressure in desorption is more increased. To cope with the difference of the local environment (relative pressure), it may be preferable to change the diameter of pores formed on the metal fins 20A depending on, for example, the temperature distribution at the respective positions of the metal fins 20A.

More specifically, pores are formed so that the average diameter thereof is more reduced as the pores are positioned more away from the positions where the refrigerant passes (portions at which the heat transfer tubes 30 are in contact with the metal fins). At the time, it is preferable that about 50 % or more of pores have a diameter distributed within the range of about ±2 nm of the average diameter, for example, within a range obtained by more minutely segmenting one metal fins 20A.

As described above, according to the Embodiment 7, since the metal fins 20A, in which the diameter of the pores is changed based on the temperature distribution of the metal fins 20A, is manufactured, water can be appropriately adsorbed and desorbed according to the relative pressure (environment) based on the temperature of the position of the metal fins 20A.

Embodiment 9

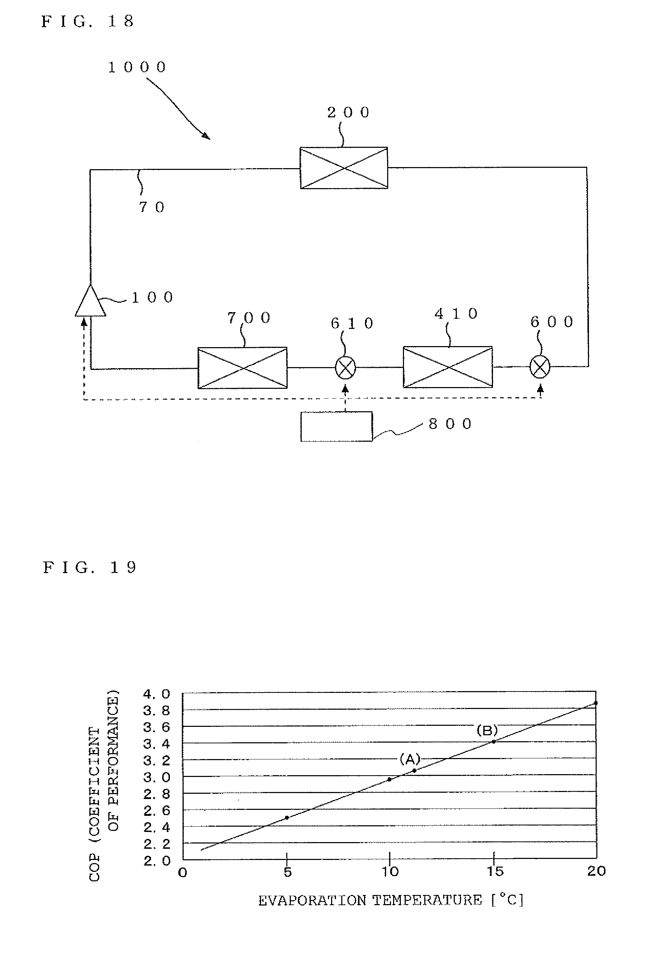

Fig. 18 is a view showing an arrangement example of a refrigerating cycle apparatus 1000 according to an Embodiment 9 of the present invention. A basic arrangement of a refrigerant circuit composed of the refrigerating cycle apparatus 1000 will be explained based on Fig. 18. The refrigerating cycle apparatus 1000 executes cooling, refrigerating, and air-conditioning operations and the like making use of a circulation of a refrigerant.

The refrigerating cycle apparatus 1000 is composed of a compressor 100, a condenser 200, a first throttle device 600, a humidifying/dehumidifying heat exchanger 410, a second throttle device 610, and an evaporator 700 which are connected sequentially by a refrigerant pipeline 70. Explanation will be made here assuming that the compressor 100 and the condenser 200 are accommodated in an outdoor unit (heat source side unit) disposed outside of a target space to be cooled and air-conditioned, and the first throttle device 600, the humidifying/dehumidifying heat exchanger 410, the second throttle device 610, and the evaporator 700 are accommodated in an indoor unit (load side unit) disposed in the target space.

Note that although the condenser 200 is disposed in the outdoor unit and the evaporator 700 is disposed in the indoor unit to explain a chilling operation, a cooling operation, and the like, the roles of the condenser 200 and the evaporator 700 are inverted in a heating operation. The condenser 200 and the evaporator 700 are switched by controlling a 4-way valve (not shown) and the like by a control means.

The refrigerant pipeline 70 is composed of gas side refrigerant piping for supplying a refrigerant made to a gaseous and liquid side refrigerant piping for supplying a refrigerant made liquid. The liquid side refrigerant piping is used to supply the refrigerant which is condensed and made liquid. The gas side refrigerant piping is used to supply the refrigerant which is evaporated and made gaseous. Further, a blower (not shown) such as a fan is disposed in the vicinity of the condenser 200 to supply air (hereinafter, called outside air) outside of the target space to the condenser 200 to accelerate heat exchange. Likewise, a blower (not shown) composed of a fan and the like is disposed in the vicinity of the evaporator 700 likewise. Note that the refrigerant with which the refrigerant tube 70 is filled will be described later.

The compressor 100 sucks the refrigerant, compresses the refrigerant, makes it into a high temperature/high pressure gas, and makes the gas flow in the refrigerant pipeline 70. The condenser 200 is a heat exchanger for condensing and liquefying the refrigerant by executing heat exchange between the refrigerant and the outside air. The first throttle device 600 is generally composed of a pressure reduction valve, and an expansion valve such as an electronic expansion valve and used to expand the refrigerant by reducing the pressure thereof.

The humidifying/dehumidifying heat exchanger 410 is composed of the heat exchangers 10, 10A and the like (hereinafter, called the heat exchanger 10 and the like) explained in the Embodiments 1 to 8 described above and has pores on the surfaces of the metal fins 20 (20A). In the following description, it is assumed that the humidifying/dehumidifying heat exchanger 410 has a pore diameter which can increase an amount of adsorption from a relative humidity of about 30 % as a boundary and allows adsorbed water to be desorbed, although this is not particularly restricted.

The humidifying/dehumidifying heat exchanger 410 mainly acts as latent heat removing equipment for supplying air in the target space, which is dehumidified by adsorbing moisture (hereinafter, simply called air), to the evaporator 700. However, the humidifying/dehumidifying heat exchanger 410 is not limited to the above use and may humidify the target space making use of the humidifying/dehumidifying heat exchanger 410 by disposing a humidifying unit in the refrigerating cycle apparatus 1000.

The second throttle device 610 is also generally composed of a pressure reduction valve, and an expansion valve such as an electronic expansion valve and used to expand the refrigerant by reducing the pressure thereof. The evaporator 700 evaporates and gasifies the refrigerant by executing heat exchange between it and air. Note that the blower disposed in the vicinity of the evaporator 700 is used to take in air as well as to supply the air, which is subjected to the heat exchange in the evaporator 700 and cooled, to a cooling target region (the inside of a room, a refrigerating/ freezing warehouse, and the like).

A control means 800 composed of, for example, a micro computer and the like controls the drive frequency of the compressor 100, the degrees of opening of the first and second throttle devices 600, 610 and the like. Although one set of the control means 800 is explained in the embodiment, controllers may be arranged in, for example, the outdoor unit and the indoor unit, respectively, and the respective controllers may control the equipment (means) arranged in the respective units. Further, at the time, the outdoor unit and the indoor unit may be controlled in association with each other so that a signal communication can be executed therebetween.

The refrigerant used in the refrigerating cycle apparatus 1000 will be explained here. A non-azeotropic mixed refrigerant, a pseudo azeotropic mixed refrigerant, a single refrigerant, and the like are available as the refrigerant which can be used in the refrigerating cycle apparatus 1000. R407C (R32/R125/R134a) and the like as a HFC (hydrofluorocarbon) refrigerant are available as the non-azeotropic mixed refrigerant. Since the non-azeotropic mixed refrigerant is a mixture of refrigerants having a different boiling point, it has characteristics in that composition ratios of a liquid phase refrigerant and a gas phase refrigerant are different.

R410A (R32/R125), R404A (R125/R143a/R134a), and the like as a HFC refrigerant are available as the pseudo azeotropic mixed refrigerant.

Further, R22 as HCFC (Hydrochlorofluorocarbon) refrigerant, R134a as the HFC refrigerant, and the like are available as the single refrigerant. The single refrigerant has characteristics in that it can be easily treated because it is not a mixture. In addition to the above refrigerants, carbon dioxide, propane, isobutane, ammonia, and the like, which are natural refrigerants, can be also used. Note that R22 shows chlorodifluoromethane, R32 shows difluoromethane, R125 shows pentafluoroethane, R134a shows 1,1,1,2-tetrafluoroethane, R143a shows 1,1,1-trifluoroethane, respectively. Accordingly, a refrigerant is preferably used according to a way of use and an object of the refrigerating cycle apparatus 1000.

Next, an operation of the refrigerating cycle apparatus 1000 will be explained. First, a case, in which the humidifying/dehumidifying heat exchanger 410 executes an operation for adsorbing water in air, will be explained. A high temperature/high pressure refrigerant compressed by the compressor 100 is made a liquid refrigerant in such a manner that it is condensed and liquefied by exchanging heat with the outside air in the condenser 200 while discharging heat.

The liquid refrigerant flows into the first throttle device 600 and is depressurized and turns to, for example, a low pressure gas/liquid two-phase refrigerant. The gas/liquid two-phase refrigerant, which has flown into the humidifying/dehumidifying heat exchanger 410 and has a temperature lower than that of air, cools the metal fins 20 and the air passing through the periphery thereof by exchanging heat therewith, and a part of it is evaporated and flows out.

At the time, the metal fins 20 adsorb moisture in the air passing therethrough, as described above. The gas/liquid two-phase refrigerant, which has flown out from the humidifying/dehumidifying heat exchanger 410 passes through the second throttle device 610 in a totally-open state and flows into the evaporator 700. The gas/liquid two-phase refrigerant is entirely evaporated and gasified by the heat exchange executed by the evaporator 700, turned into a gas refrigerant, sucked into the compressor 100 again, and ejected.

Next, a case, in which an operation for desorbing moisture adsorbed by the humidifying/dehumidifying heat exchanger 410 is executed, will be explained. The high temperature/high pressure refrigerant compressed by the compressor 100 is turned into a gas/liquid two-phase refrigerant while discharging heat to the outside air through the condenser 200. The gas/liquid two-phase refrigerant in a high pressure state passes through the first throttle device 600 in a totally open state and flows into the humidifying/dehumidifying heat exchanger 410.

The gas/liquid two-phase refrigerant, which has flown into the humidifying/dehumidifying heat exchanger 410 and has a temperature higher than air, is liquefied by heating the metal fins 20 and the air around them. The liquefied refrigerant is turned into a low pressure gas/liquid two-phase refrigerant by reducing its pressure with the second throttle device 610. The gas/liquid two-phase refrigerant flows into the evaporator 700, is entirely evaporated and gasified therein, and sucked into the compressor 100 again as a gas refrigerant.

Fig. 19 is a view showing the relation between an evaporation temperature and COP (Coefficient of Performance: energy consumption efficiency). In Fig. 19, it can be found that an evaporation temperature is proportional to COP. When, for example, the evaporation temperature is 11 °C, COP is about 3.1 ((A) shown in the view), and when the evaporation temperature is increased to 20 °C, COP increases up to about 3.9 ((B) shown in the view). Thus, when the evaporation temperature can be set high, COP can be improved accordingly.

In the refrigerating cycle apparatus 1000 of this embodiment, roles can be shared by treating the latent heat of moisture in air by the humidifying/dehumidifying heat exchanger 410 and treating the sensible heat thereof by the evaporator 700. Accordingly, the evaporation temperature of the refrigerant can be set higher than that in the case when the latent heat and the sensible heat are treated by the evaporator 700. As a result, in, for example, an air conditioner and the like, even in the case where the evaporator 700 is frosted because the evaporation temperature thereof cannot help being conventionally set to a dew point or less, the frosted state can be prevented by the above arrangement and it is not necessary to execute a defrosting operation.

Further, the moisture adsorbed into the humidifying/dehumidifying heat exchanger 410 (metal fins 20) can be desorbed by, for example, making use of condensed exhaust heat in the condenser 200. The moisture can be discarded or used for a humidifying operation. As a result, it is not necessary to specially provide a heating means such as a heater for desorbing water. Accordingly, since power consumed by the heating means is not necessary, power consumption can be greatly reduced.

When the freezing cycle apparatus 1000 of the embodiment is applied to, for example, a refrigerator warehouse, the control means 800 preferably controls respective equipments so that the refrigerating cycle apparatus is operated to continuously maintain a refrigerated chamber (air conditioned space) in the refrigerator warehouse in the condition of a dry-bulb temperature of 10 °C, a relative humidity of 60 %, and an absolute humidity of 4.56g/kg when an outside air condition is maintained at a dry-bulb temperature of 30 °C, a relative humidity of 60 %, and an absolute humidity of 16.04 g/kg.

As described above, according to the refrigerating cycle apparatus of the Embodiment 9, the evaporation temperature of the refrigerant at the time when heat exchange is executed between the refrigerant and air by the evaporator 700 need not be set in consideration of latent heat due to moisture, and it is sufficient to set the temperature of the refrigerant in consideration of sensible heat by adsorbing moisture into the metal fins 20, making use of the humidifying/dehumidifying heat exchanger 410 and the like composed of the heat exchanger 10 and the like of the Embodiments 1 to 8 described above, as a dehumidifying/humidifying device. Accordingly, since a compression ratio can be reduced in the compressor of the refrigerating cycle apparatus, an energy performance can be improved in terms of COP and the like in the refrigerating cycle apparatus.

Embodiment 10

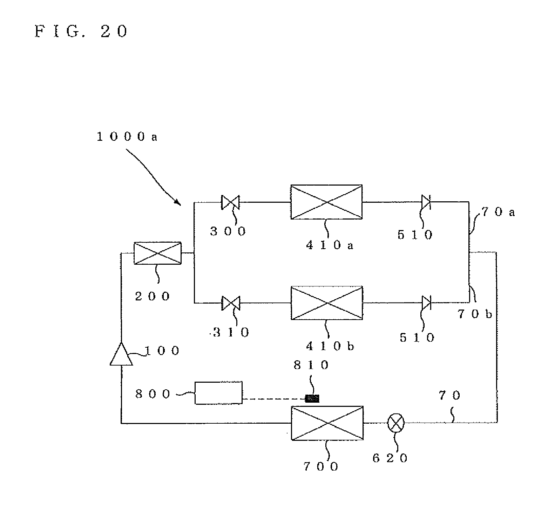

Fig. 20 is a view showing an arrangement example of a refrigerating cycle apparatus 1000a according to an Embodiment 10 of the present invention. The refrigerating cycle apparatus 1000a of the Embodiment 10 will be explained assuming that it is an air conditioner for executing, for example, a cooling/heating operation, although this is not particularly restricted. Further, since the components of Fig. 20, which have the same reference numeral as those of the drawing explained in the Embodiment 9, execute the same operations, explanation of the components is omitted.

The refrigerating cycle apparatus 1000a is arranged so that a compressor 100, a condenser 200, an on-off valve 300 as a first on-off valve and an on-off valve 310 as a second on-off valve, which are juxtaposed, a humidifying/dehumidifying heat exchanger 410a and a humidifying/dehumidifying heat exchanger 410b, which are juxtaposed, a backflow preventing means 500 and a backflow preventing means 510, which are juxtaposed, a throttle device 620, and an evaporator 700 are sequentially connected with a refrigerant pipeline.

As explained in the Embodiments 1 to 8, the refrigerating cycle apparatus 1000a has the humidifying/dehumidifying heat exchanger 410a (first heat exchanger) and the humidifying/dehumidifying heat exchanger 410b (second heat exchanger) each composed of a heat exchanger 10 and the like having metal fins 20 on the surfaces of which pores are formed,. These two humidifying/dehumidifying heat exchangers 410a, 410b are independently accommodated in an indoor unit, respectively.

Further, the refrigerant pipeline 70 is branched into refrigerant piping 70a and refrigerant piping 70b, the on-off valve 300, the humidifying/dehumidifying heat exchanger 410a, and the backflow preventing means 500 are connected to each other by the refrigerant piping 70a, the on-off valve 310, the humidifying/dehumidifying heat exchanger 410b, and the backflow preventing means 510 are connected to each other by the refrigerant piping 70b, and then, the refrigerant piping 70a and the refrigerant piping 70b meet again.

The refrigerant as explained in the Embodiment 2 is preferably used for a refrigerant flowing through the refrigerant pipeline 70. Further, the refrigerating cycle apparatus 1000a has a temperature/humidity detecting means 810 (first temperature/humidity detecting means) disposed on an air duct inlet side of the evaporator 700 (side from which air flows in) to detect the temperature and the humidity of air flowing into the evaporator 700.

The type of the temperature/humidity detecting means 810 is not particularly restricted as long as it can detect a temperature and a humidity. It may be composed of, for example, a temperature sensor such as a thermistor, a thermometer, a humidity sensor, a hygrometer, and the like.

The on-off valves 300, 310 act as flow path selection means for selecting a flow path of a refrigerant circuit, and the type thereof is not particularly restricted. The backflow preventing means 500, 510 are used to prevent the backflow of the refrigerant flowing through the refrigerant piping 70a, 70b. Although the backflow preventing means 500, 510 are preferably composed of backflow valves and the like, the type thereof is not particularly restricted. The throttle device 620 is generally composed of a pressure reduction valve and an expansion valve and used to expand the refrigerant by reducing the pressure thereof. It is preferably composed of, for example, an electronic expansion valve and the like.

A control means 800 of this embodiment further controls respective equipments including the on-off valves 300, 31 and the like in addition to the controls described above. The control means 800 controls an air path by switching air path switching means 3010a to 304a, 301b to 304b, and the like to be described later. Further, the control means 800 executes processes such as a process of calculating the relative humidity of air in the evaporator 700 based on the information from temperature/humidity detecting means 810 and converting the relative humidity to a dew point (dew point temperature), and the like.

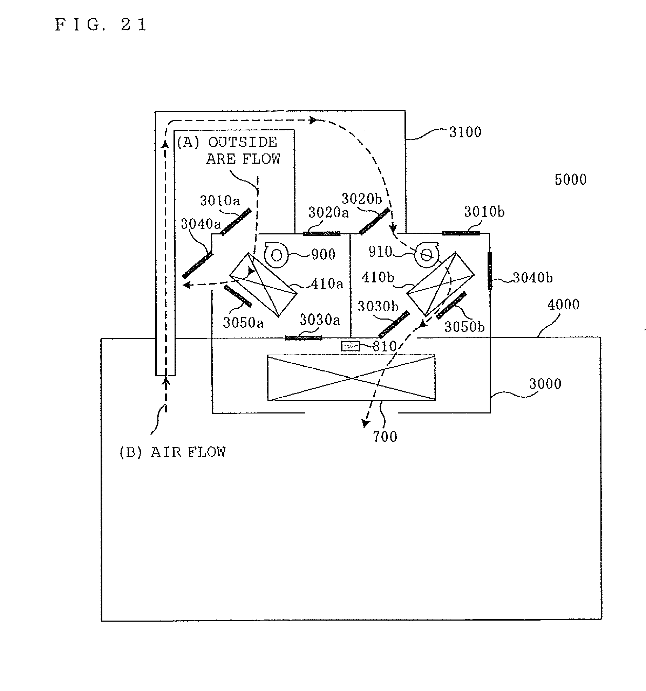

Fig. 21 is a view showing an arrangement of an indoor unit 3000 in which the evaporator 700 and the like are accommodated. The indoor unit 3000 of Fig. 21 shows an example in which a part thereof is installed inside a freezer warehouse (air conditioned space) 4000 and the other portion thereof is installed on an outside air 500 side. The humidifying/dehumidifying heat exchangers 410a and 410b, and the evaporator 700 shown in Fig. 20 are accommodated in the indoor unit 3000. Blowers 900 and 910 each composed of a centrifugal fan, an axial fan, and the like are disposed in the vicinity of the humidifying/dehumidifying heat exchangers 410a and 410b, respectively. Further, a duct 3100 is disposed in the indoor unit 3000 so that it can not only supply air from the evaporator 700 into the inside of the freezer warehouse 4000 but also suck air.

The indoor unit 3000 has such a structure that it can separate the humidifying/dehumidifying heat exchangers 410a and 410b in view of the air path (airflow). The indoor unit 3000 can switch the air path so that the humidifying/dehumidifying heat exchangers 410a, 410b can communicate with the inside of the freezer warehouse 4000 and with the outside air 5000 by switching the air path.

The air path is switched by an air path switching means 3110a and an air path switching means 3110b, an air path switching means 3120a and an air path switching means 3120b, an air path switching means 3130a and an air path switching means 3130b, and an air path switching means 3140a and an air path switching means 3140b. The air path is finely adjusted by an air path adjusting means 3050a and an air path adjusting means 3050b.

Next, a flow of air in the indoor unit 3000 will be explained. Fig. 21 shows that the air path switching means 3010a, the air path switching means 3020b, the air path switching means 3030b, and the air path switching means 3040a are in an open state and that the air path switching means 3010b, the air path switching means 3020a, the air path switching means 3030a, and the air path switching means 3040b are in a closed state.

When the respective air path switching means are in the above states, the space in the humidifying/dehumidifying heat exchanger 410a communicates with the outside air 5000 so that air flows thereinto from the outside (arrow A). Further, the space in the humidifying/dehumidifying heat exchanger 410b communicates with the inside of the freezer warehouse 4000 through the duct 3100 so that air (for example, air having temperature: 10 °C, relative humidity: 60 %) flows thereinto (arrow B).

When the air path is formed as described above, desorption is executed by the humidifying/dehumidifying heat exchanger 410a, and adsorption is executed by the humidifying/dehumidifying heat exchanger 410b. With these operations, a latent heat treatment of the humidifying/ dehumidifying heat exchanger 410b is separated from a sensible heat treatment of the evaporator 700. In contrast, when the open/close states of the respective air path switching means are reversed, air flows into the space in the humidifying/dehumidifying heat exchanger 410a, and outside air flows into the space in the humidifying/dehumidifying heat exchanger 410b. Then, adsorption is executed by the humidifying/dehumidifying heat exchanger 410a, and desorption is executed by the humidifying/dehumidifying heat exchanger 410b.

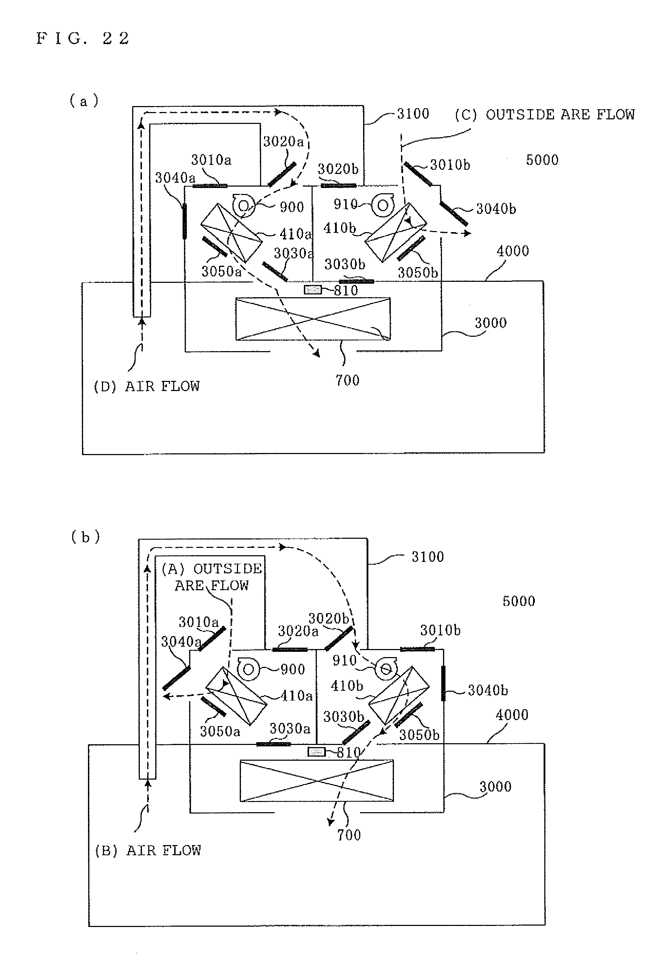

Fig. 22 is an explanatory view showing a state that the air path of the indoor unit 3000 is switched. Fig. 22 (a) shows that the air path switching means 3010a, the air path switching means 3020b, the air path switching means 3030b, and the air path switching means 3040a are in a closed state and that the air path switching means 3010b, the air path switching means 3020a, the air path switching means 3030a, and the air path switching means 3040b are in an open state.

In Fig. 22(a), the space in the humidifying/ dehumidifying heat exchanger 410b communicates with the outside air 5000 so that outside air flows thereinto (arrow C). Further, the space in the humidifying/dehumidifying heat exchanger 410a communicates with the inside of the freezer warehouse 4000 through the path 3100 so that air flows thereinto (arrow D). At the time, the humidifying/dehumidifying heat exchanger 410b desorbs moisture, and the humidifying/ dehumidifying heat exchanger 410a adsorbs moisture. Since Fig. 22(b) shows the same case as that shown in Fig. 21, the explanation thereof is omitted.

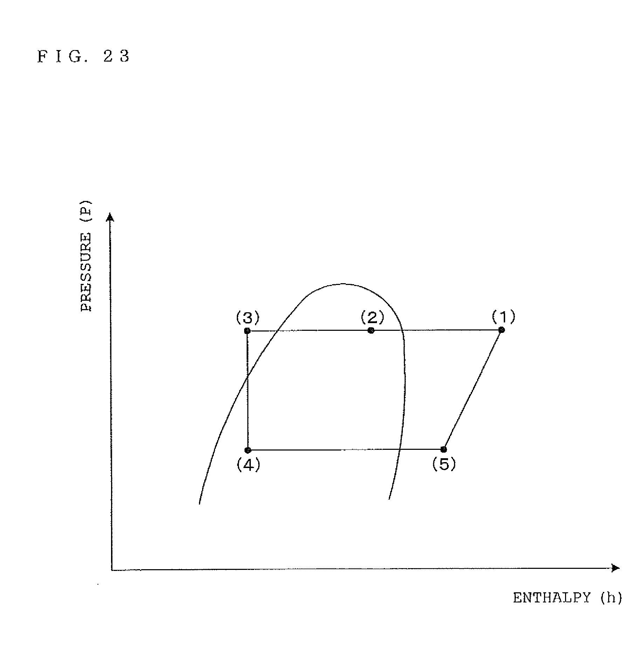

Fig. 23 is a P-h chart (Mollier Chart) showing the state of a refrigerant in a refrigerating cycle. The state of the refrigerant in the refrigerating cycle will be explained based on Fig. 23. In Fig. 23, a vertical axis shows an absolute pressure (P), and a horizontal axis shows an enthalpy (h). In Fig. 23, a portion surrounded by a saturated liquid line and a saturated vapor line shows that the refrigerant is in a gas-liquid two-phase state, a portion on the left side of the saturated liquid line shows that the refrigerant is a liquefied refrigerant, and the portion on the right side of the saturated vapor line shows that the refrigerant is a gas refrigerant. That is, it can be found that the refrigerant is the gas refrigerant in states (1) and (5), is the gas-liquid two-phase refrigerant in states (2) and (4), and is the liquid refrigerant in a state (3).

Next, an operation of the refrigerating cycle apparatus 1000a will be explained based on Figs. 20 and 23. An operation, in which moisture is desorbed by the humidifying/dehumidifying heat exchanger 410a and adsorbed by the humidifying/dehumidifying heat exchanger 410b by opening the on-off valve 300 and closing the on-off valve 310, will be explained here. At the time, since the on-off valve 310 is closed, the refrigerant does not flow into the humidifying/ dehumidifying heat exchanger 410b.

The refrigerant, which is compressed by the compressor 100 and in the high temperature/high pressure gas state (a state (1) shown in Fig. 23) flows into the condenser 200. The refrigerant in this state is turned into the gas-liquid two-phase refrigerant while radiating a part of its heat through the condenser 200 (a state (2) shown in Fig. 23). The gas-liquid two-phase refrigerant in the high pressure state flows into the humidifying/dehumidifying heat exchanger 410a. The flowing gas-liquid two-phase refrigerant passes through the heat transfer tubes 30, and, at the time, since the heat of the refrigerant is exchanged with that of air, the temperature of the metal fins 20 and their vicinity are increased and a relative humidity is lowered. With this operation, the water adsorbed into the metal fins 20 is desorbed. The gas-liquid two-phase refrigerant is turned to the liquefied liquid refrigerant (the state (3) shown in Fig. 23).

The refrigerant flows into the backflow preventing means 500 and the pressure thereof is reduced by the throttle device 620. The refrigerant whose pressure is reduced is turned to the low pressure gas-liquid two-phase refrigerant (the state (4) shown in Fig. 23). Then, the gas-liquid two-phase refrigerant flows into the evaporator 700, is evaporated by drawing heat from air, and is turned to the low pressure gas refrigerant (the state (5) shown in Fig. 23). ^
The air is the air from which the humidifying/dehumidifying heat exchanger 410b adsorbs moisture as described later. The air is cooled and flows into the inside of the freezer warehouse 4000. Then, the gas refrigerant is sucked again into the compressor 100 and circulates in the refrigerant circuit. Accordingly, a cooling/freezing operation is executed in such a manner that the refrigerant circulates in the refrigerant circuit while changing its state by repeatedly absorbing and radiating heat.

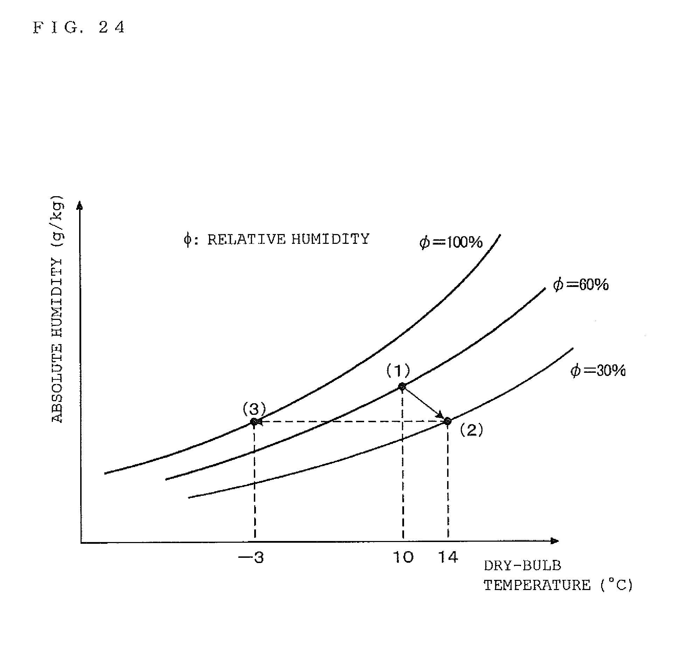

Fig. 24 is a psychrometric chart explaining an operation of the humidifying/dehumidifying heat exchanger 410b of the refrigerating cycle apparatus 1000a. The operation of the refrigerating cycle apparatus 1000a described above will be explained using the psychrometric chart and the arrangement view of Fig. 21.
In Figs. 21 and 24, as to the air passing through the humidifying/dehumidifying heat exchanger 410b communicating with the inside of the freezer warehouse 4000, the explanation will be made assuming that the air is in a state (1) shown in Fig. 24, at the time before passing through the humidifying/dehumidifying heat exchanger 410b, the air is in a state (2) shown in Fig. 24, at the time just after passing through the humidifying/dehumidifying heat exchanger 410b, the air is in a state (3) shown in Fig. 24, at the time just after exchanging its heat with that of the evaporator 700.

A case, in which the humidifying/dehumidifying heat exchanger 410b adsorbs moisture in air existing in the inside of the refrigerator warehouse 4000, will be explained. The air in the state (1) has a dry-bulb temperature of 10 °C, a relative humidity of 60 %, and an absolute humidity of 4.56 g/kg. When the air in this state flows into the humidifying/ dehumidifying heat exchanger 410b, the air is turned to the air in the state (2), in which the relative humidity is reduced from 60 % to, for example, 30 % along an isoenthalpy line, the absolute humidity is also reduced from 4.56 g/kg to 2.96 g/kg, and the dry-bulb temperature increases from 10 °C to 14 °C, and the air flows into the evaporator 700.

As described above, since the amount of water, which can be adbsorbed by the humidifying/dehumidifying heat exchanger 410b, is increased in the region in which the relative humidity is about 30 % or more, the humidity of the air in the state (1) can be reduced. The air in this state (2) is cooled by removing sensible heat thereof by means of heat exchange with the evaporator 700 keeping an absolute humidity, and turned to the air in the state (3) in which the relative humidity is less than 100 % and the dry-bulb temperature is -2 °C.

Since the inside of the freezer warehouse 4000 is ordinarily kept in a temperature zone lower than 10 °C, an evaporation temperature must be set lower than 0 °C in many cases. However, the refrigerating cycle apparatus 1000a can set the evaporation temperature (temperature 14 °C in the state (2)) of the evaporator 700 higher than a dew point temperature (for example, a dew point temperature - 2.9 °C in the state (2)) so that a refrigerating cycle does not execute a defrost operation for defrosting the frost-laden evaporator 700.

Note that the control means 800 preferably adjusts the evaporation temperature of the evaporator 700 by controlling the degree of opening of the throttle device 620, the drive frequency of the compressor 100, the number of revolutions of the blower 910, and the like, so as to increase the evaporation temperature. Further, it is as explained in Fig. 19 that when the evaporation temperature can be set to a high temperature, COP can be improved accordingly. Further, since the evaporation temperature of the evaporator 700 can be set higher than the dew point, a drain is not generated. That is, since a drain tube is not necessary, a manufacturing cost can be reduced.

Since the control means 800 calculates the relative humidity of air in the evaporator 700 by the information from the temperature/humidity detecting means 810 and converts the relative humidity to the dew point, it preferably detects the dew point based on a result of the conversion. Since the air in the state (3) is diffused into the inside of the freezer warehouse 4000, the dry-bulb temperature of the inside of the freezer warehouse 4000 is kept to 10 °C or less. Further, the amount of water, which can be adsorbed by the humidifying/dehumidifying heat exchanger 410b, is limited. Accordingly, when the control means 800 determines that the relative humidity on the air path outlet side of the humidifying/ dehumidifying heat exchanger 410b becomes larger than a predetermined threshold value by the information detected by the temperature/humidity detecting means 810, it switches the flow of the refrigerant by switching the on/off valve 300 from an open state to a closed state and the on/off valve 310 from a closed state to an open state. Then, a high temperature/high pressure gas refrigerant is made to flow into the humidifying/dehumidifying heat exchanger 410b to thereby increase the temperature of the metal fins 20 and the temperature of the air in the vicinity thereof.

That is, the humidifying/dehumidifying heat exchanger 410b, which has adsorbed moisture, is switched to desorb moisture. When the temperature of the metal fins 20 and the temperature of the air in the vicinity thereof are increased, a relative humidity is lowered and adsorbed moisture is reproduced by being discharged. In contrast, since the flow path of the refrigerant is switched, the humidifying/dehumidifying heat exchanger 410a comes to adsorb moisture in air. Since the moisture in the air is adsorbed by the humidifying/dehumidifying heat exchanger 410a, the humidity of the air in a warehouse 400 is reduced from the state (1) to the state (2) as shown in Fig. 24.

Further, the amount of moisture, which can be adsorbed by the humidifying/dehumidifying heat exchanger 410b, is limited. Accordingly, when the control means 800 determines that the relative humidity on the air path outlet side of the humidifying/dehumidifying heat exchanger 410a becomes larger than a predetermined threshold value by the information detected by the temperature/humidity detecting means 810, it switches the flow of the refrigerant by switching the on/off valve 300 from a closed state to an open state and the on/off valve 310 from an open state to a closed state.

Then, a high temperature/high pressure gas refrigerant is made to flow into the humidifying/dehumidifying heat exchanger 410a, and moisture is desorbed by increasing the temperature of the metal fins 20 and the temperature of the air in the vicinity thereof and lowering a humidity.

As described above, in the refrigerating cycle apparatus 1000a, when one humidifying/dehumidifying heat exchanger (the humidifying/dehumidifying heat exchanger 410b) adsorbs moisture, the moisture of the other humidifying/ dehumidifying heat exchanger (the humidifying/dehumidifying heat exchanger 410a) is desorbed, and these operations are alternately switched according to an amount of adsorption of moisture. Accordingly, the humidity (latent heat) of the air in the inside of the freezer warehouse 4000 can be continuously removed by switching the air path and the like and selecting the flow path of the refrigerant.

Table 1 summarizes the controlled states of the on/off valve 300, the on/off valve 310 (flow path selection means) and the air path switching means 3010a to 3040 and the functions of the humidifying/dehumidifying heat exchanger 410a and the humidifying/dehumidifying heat exchanger 410b. In Table 1, a pattern 1 shows a case in which the humidifying/dehumidifying heat exchanger 410a adsorbs moisture and the humidifying/dehumidifying heat exchanger 410b desorbs the desorbed moisture as shown in Fig. 22(a).

Further, a pattern 2 shows a case in which the humidifying/dehumidifying heat exchanger 410a desorbs adsorbed moisture and the humidifying/dehumidifying heat exchanger 410b absorbs moisture as shown in Fig. 22(b). A continuous operation can be executed by alternately switching the pattern 1 and the pattern 2.

Table 1

| Pattern | Heat exchanger | | Open/close valve | | Air path switching means | | Air path switching means | | Air path switching means | | Air path switching means | |
|---|---|---|---|---|---|---|---|---|---|---|---|---|
| | 40a | 40b | 30 | 31 | 301a | 301b | 302a | 302b | 303a | 303b | 304a | 304b |
| 1 | adsorb | desorb | closed | open | closed | open | open | closed | open | closed | closed | open |
| 2 | desorb | adsorb | open | closed | open | closed | closed | open | closed | open | open | closed |

As described above, according to the refrigerating cycle apparatus 1000a of the Embodiment 10, since the humidifying/dehumidifying heat exchanger 410a and the humidifying/dehumidifying heat exchanger 410b each composed of the heat exchanger 10 and the like of the Embodiments 1 to 8 described above alternately and continuously adsorb moisture in air of the inside of freezer warehouse 4000, the defrost operation, which is conventionally executed frequently, can be avoided and thus power consumed in the defrost operation can be further reduced. Further, since the evaporation temperature of the evaporator 700 can be set higher than the dew point, the refrigerating cycle can be efficiently operated.

When the humidifying/dehumidifying heat exchanger 410a and the humidifying/dehumidifying heat exchanger 410b desorb moisture adsorbed thereby, since they desorb the moisture making use of the heat of the refrigerant condensed by the condenser 200 (waste heat which is not necessary to cool the freezer warehouse 400), an installation space of a heat means for desorption can be saved because it need not be specially installed as well as power for the heat means is not necessary.

Further, in the refrigerating cycle apparatus 1000a, the refrigerant does not require a high pressure exceeding a critical pressure. That is, since the compressor 100, the condenser 200 and the refrigerant pipeline 70 (including the refrigerant piping 70a, 70b) for connecting them can be composed of a material having a low pressure-resistant performance, a product cost can be reduced. Further, since the compression ratio of the refrigerant in the compressor 100 can be also suppressed, the operation efficiency of the compressor 100 can be improved. That is, COP can be greatly improved, and energy can be saved.

Embodiment 11

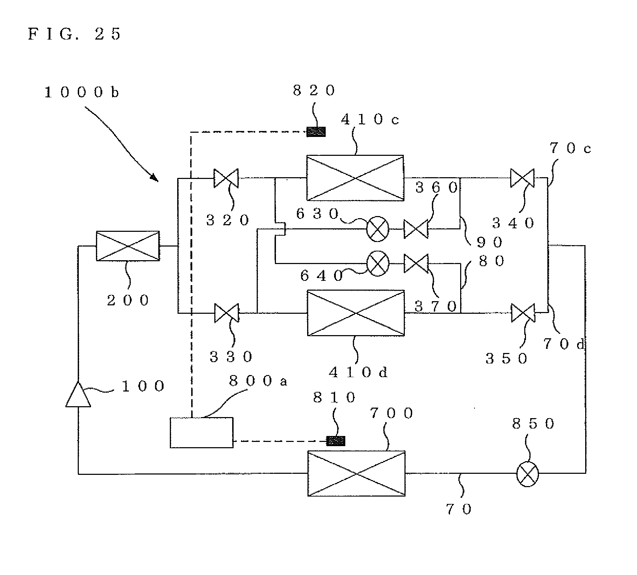

Fig. 25 is a view showing an arrangement example of a refrigerating cycle apparatus 1000 according to an Embodiment 11 of the present invention. The refrigerating cycle apparatus 1000b of the Embodiment 10 will be explained assuming that it is, for example, an air conditioner for executing a cooling/heating operation, although this is not particularly restricted. Further, since the components in Fig. 25, which have the same reference numeral as those of the drawings explained in the Embodiments 9 and 10, execute the same operations, explanation of the components is omitted.

The refrigerating cycle apparatus 1000b is arranged so that a compressor 100, a condenser 200, a condenser 200, an on-off valve 320 as a first on-off valve and an on-off valve 330 as a second on-off valve, which are juxtaposed humidifying/dehumidifying heat exchangers 410c and 410d, which are juxtaposed, an on/off valve 340 and an on/off valve 350, which are juxtaposed, a throttle device 850 (third throttle device), and an evaporator 700 are sequentially connected with a refrigerant pipeline 70.
The refrigerating cycle apparatus 1000b also has the humidifying/dehumidifying heat exchanger 410c (first heat exchanger) and the humidifying/dehumidifying heat exchanger 410d (second heat exchanger) each composed of a heat exchanger 10 having metal fins 20 on the surfaces of which pores are formed, and the like. These two humidifying/dehumidifying heat exchangers 410c, 410d are independently accommodated in an indoor unit, respectively.

The refrigerant pipeline 70 is branched into refrigerant piping 70c and refrigerant piping 70d, and the refrigerant piping 70c and the refrigerant piping 70d meet again after the on-off valve 320, the humidifying/dehumidifying heat exchanger 410c, and the on/off valve 340 are connected with the refrigerant piping 70c and the on-off valve 330, the humidifying/dehumidifying heat exchanger 410d, and the on/off valve 350 are connected with the refrigerant piping 70d. The refrigerant described above is preferably used as a refrigerant flowing through the refrigerant pipeline 70.
Further, the refrigerant piping 70c and the refrigerant piping 70d are provided with bypath piping 80 (first bypath piping), which is branched from the refrigerant piping 70c between the on/off valve 320 and the humidifying/dehumidifying heat exchanger 410c and meets with the refrigerant piping 70d between the humidifying/dehumidifying heat exchanger 410d and the on/off valve 350, and bypath piping 90 (second bypath piping), which is branched from the refrigerant piping 70d between the on/off valve 330 and the humidifying/dehumidifying heat exchanger 410d and meets with the refrigerant piping 70c between the humidifying/dehumidifying heat exchanger 410c and the on/off valve 340.

A throttle device 630 (first throttle device) and an on/off valve 360 (third on/off valve) are arranged in the bypath piping 90. Further, a throttle device 640 (second throttle device) and an on/off valve 370 (fourth on/off valve) are arranged in the bypath piping 80. Further, in the refrigerating cycle apparatus 1000b, a temperature/humidity detecting means 810, for detecting the temperature and the humidity of the evaporator 700 is disposed on the air path inlet side of the evaporator 700, and a temperature/humidity detecting means 820 (second temperature/humidity detecting means) for detecting the temperature and the humidity of the humidifying/dehumidifying heat exchanger 410c and the humidifying/dehumidifying heat exchanger 410d is disposed on the air path outlet side of the humidifying/dehumidifying heat exchanger 410c.

Types of the temperature/humidity detecting means 810 and 820 are not particularly restricted as long as they can detect a temperature and a humidity. They may be composed of, for example, a temperature sensor such as a thermistor, a thermometer, a humidity sensor, a hygrometer. Further, although a case, in which each one set of the temperature/humidity detecting means 810 and the temperature/humidity detecting means 820 is installed, is shown as an example, the embodiment is not limited thereto and a plurality of sets may be installed. Further, the temperature/humidity detecting means 820 may be disposed on the air path outlet side of each of the humidifying/dehumidifying heat exchanger 410c and the humidifying/dehumidifying heat exchanger 410d.

The refrigerating cycle apparatus 1000b is provided with a control means 800a for controlling the drive frequency of the compressor 100, the degrees of opening of the on/off valves 320 to 370, and the degrees of opening of the throttle devices 630, 640, and 850. The on/off valves 320 to 370 are used to switch a flow path, and the type thereof is not particularly restricted. The throttle devices 630, 640, and 850 are generally composed of a pressure reduction valve and an expansion valve and used to expand the refrigerant by reducing the pressure thereof. They are preferably composed of, for example, an electronic expansion valve and the like.

The control means 800a executes processes such as calculating the relative humidity on the air path outlet side of the humidifying/dehumidifying heat exchanger 410c based on signals including the data from the temperature/humidity detecting means 820, further converting the relative humidity to a dew point (dew point temperature), calculating the relative humidity in the evaporator 700 based on the information from the temperature/humidity detecting means 810, converting the relative humidity to the dew point (dew point temperature), and the like in addition to controlling respective equipment.

Note that when the adsorbing function and the desorbing function of the humidifying/dehumidifying heat exchanger 410c and the humidifying/dehumidifying heat exchanger 410d are switched, the control means 800a calculates the relative humidity on the air path outlet side of the humidifying/dehumidifying heat exchanger 410d and converts the relative humidity to the dew point (dew point temperature).

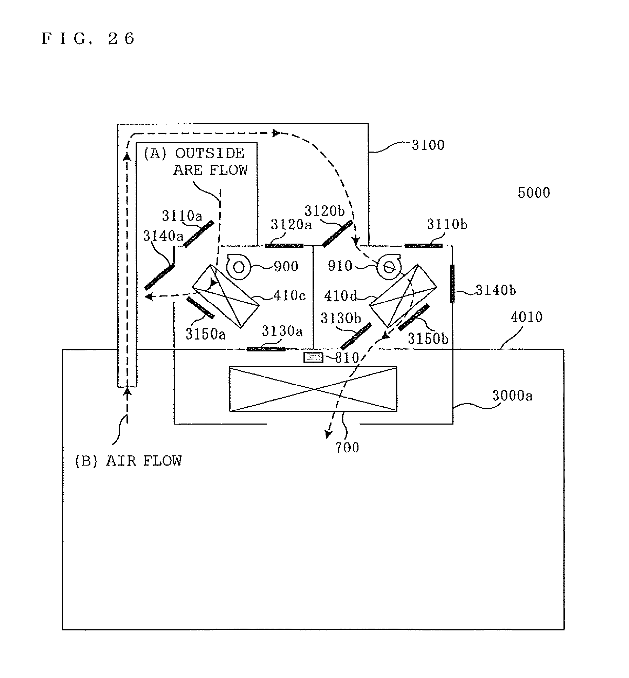

Fig. 26 is a view showing an arrangement of an indoor unit 3000a in which the evaporator 700 and the like are accommodated. A basic arrangement of the indoor unit 3000a will be explained based on Fig. 26. Note that a difference from the indoor unit 3000 shown in Fig. 21 will be mainly explained. Fig. 26 shows a case in which a part of the indoor unit 3000a is installed in the inside of a room (air conditioned space) 4010 and the other portion thereof is installed on an outside air 5000 side. The humidifying/dehumidifying heat exchangers 410c and 410d and the evaporator 700 shown in Fig. 25 are accommodated in the indoor unit 3000a.

The indoor unit 3000a has a structure to isolate the humidifying/dehumidifying heat exchanger 410c from the humidifying/dehumidifying heat exchanger 410d in view of an air path. The indoor unit 3000a can switch the air path so that the humidifying/dehumidifying heat exchanger 410c and the humidifying/dehumidifying heat exchanger 410d can be communicated with the inside of the room 4010 and the outside air 5000 by switching the air path.

The air path can be switched in the indoor unit 3000, and the humidifying/dehumidifying heat exchangers 410c, 410d can be caused to communicate with the inside of the room 4010 or the outside air 5000 by switching the air path. The air path is switched by air path switching means 3110a and 3110b, air path switching means 3120a and 3120b, air path switching means 3130a and 3130b, and air path switching means 3140a and 3140b. The air path is finely adjusted by an air path adjusting means 3150a and air path adjusting means 3150b.

Next, a flow of air in the indoor unit 3000a will be explained. Fig. 26 shows that the air path switching means 3110a, the air path switching means 3120b, the air path switching means 3130b, and the air path switching means 3140a are in an open state, and the air path switching means 3110b, the air path switching means 3120a, the air path switching means 3130a, and an air path switching means 3140b are in a closed state.

When the respective air path switching means are in the above states, the space in the humidifying/dehumidifying heat exchanger 410c communicates with the outside air 5000 so that it flows thereinto (arrow A). Further, the space in the humidifying/dehumidifying heat exchanger 410d communicates with the inside of the room 4010 through the path 3100 so that air (for example, air temperature: 26 °C, relative humidity: 60 %) flows thereinto (arrow B).

When the air path is formed as described above, desorption is executed in the humidifying/dehumidifying heat exchanger 410c, and adsorption is executed in the humidifying/dehumidifying heat exchanger 410d. With this operation, a latent heat treatment of the humidifying/dehumidifying heat exchanger 410d is separated from a sensible heat treatment of the evaporator 700. In contrast, when the opening/closing states of the respective air path switching means are reversed, adsorption is executed in the humidifying/dehumidifying heat exchanger 410c, and desorption is executed in the humidifying/dehumidifying heat exchanger 410d.

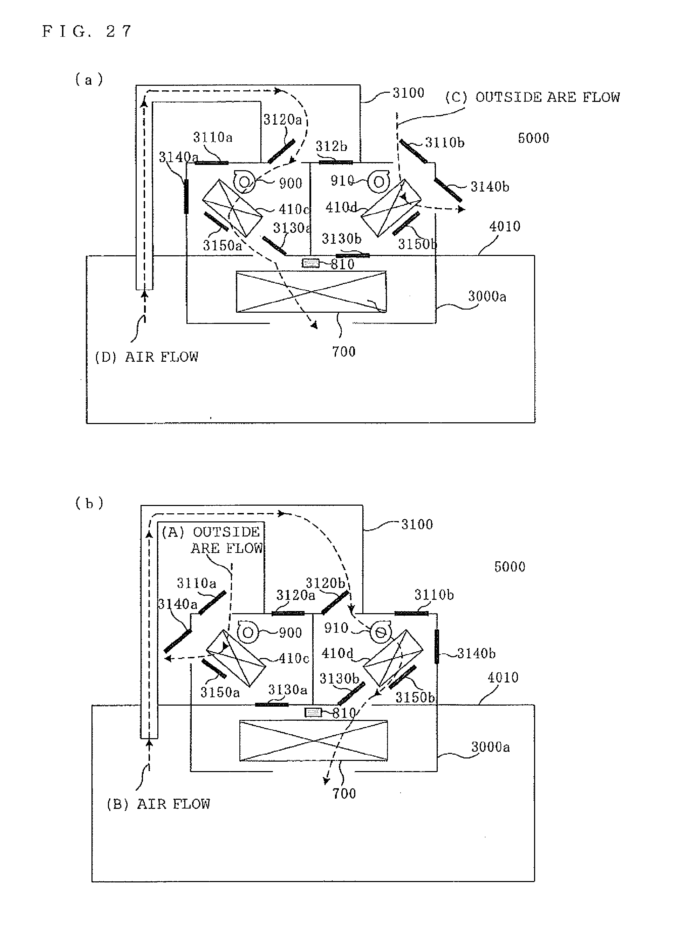

Fig. 27 is an explanatory view showing the state that the air path of the indoor unit 3000a is switched. Fig. 27 shows a case in which a part of the indoor unit 3000a is installed in the inside of the room 4010 and the other portion thereof is installed on the outside air 5000 side. Note that Fig. 27(a) shows that the air path switching means 3110a, the air path switching means 3120b, the air path switching means 3130b, and the air path switching means 3140a are in a closed state, and the air path switching means 3110b, the air path switching means 3120a, the air path switching means 3130a, and the air path switching means 3140b are in an open state.

In Fig. 27(a), the space included in the humidifying/dehumidifying heat exchanger 410d communicates with the outside air 5000 so that outside air flows therein (arrow C). Further, the space included in the humidifying/dehumidifying heat exchanger 410c communicates with the inside of the room 4010 through the duct 3100 so that air flows thereinto (arrow D). At the time, the humidifying/dehumidifying heat exchanger 410d desorbs water, and the humidifying/dehumidifying heat exchanger 410c adsorbs water. Since Fig. 27(b) shows the same case as that shown in Fig. 26, the explanation thereof is omitted.

When the refrigerating cycle apparatus 1000b is applied to an air conditioner such as a room air conditioner, a package air conditioner, the control means 800a preferably controls respective equipments so as to operate the refrigerating cycle apparatus 1000b, in order to continuously maintain the inside of the room 4010 (air conditioned space) in the condition of a dry-bulb temperature of 26 °C, a relative humidity of 60 %, and an absolute humidity of 8.74 g/kg, at the time when the condition on the outside air 5000 side is maintained in the condition of a dry-bulb temperature of 30 °C, a relative humidity of 60 %, and an absolute humidity of 16.04 g/kg.

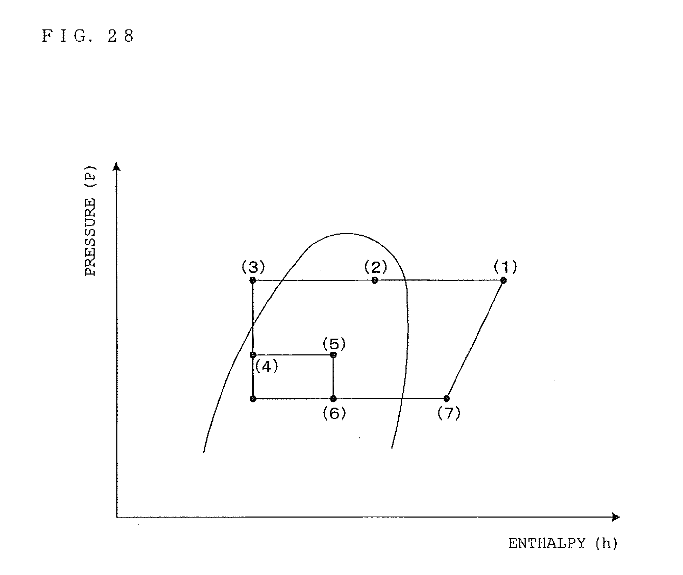

Fig. 28 is a P-h chart (Mollier Chart) showing the state of a refrigerant in a refrigerating cycle. The state of the refrigerant in the refrigerating cycle will be explained based on Fig. 28. It can be found in Fig. 28 that the refrigerant is a gas refrigerant in a state (1) and a state (7), a gas-liquid two-phase refrigerant in a state (2), a state (4), a state (5), and a state (6), and a liquid refrigerant in a state (3).

Next, an operation of the refrigerating cycle apparatus 1000b will be explained based on Figs. 25 and 28. Here, an operation of the refrigerating cycle apparatus 1000b in a case when the on/off valves 320, 340, and 350 are in an open state, the on/off valve 330, 370 and 360 are in a closed state, the humidifying/dehumidifying heat exchanger 410c is acted as a desorbing heat exchanger, and the humidifying/dehumidifying heat exchanger 410d is acted as an adsorbing heat exchanger, will be explained.

The refrigerant, which is compressed by the compressor 100 and in the high temperature/high pressure gas state (the state (1) shown in Fig. 28) flows into the condenser 200. The refrigerant in this state is turned to the gas-liquid two-phase refrigerant while radiating a part of its heat to outside air through the condenser 200 (the state (2) shown in Fig. 28). The gas-liquid two-phase refrigerant in the high pressure state flows into the humidifying/dehumidifying heat exchanger 410c.

The gas-liquid two-phase refrigerant flowing into the humidifying/dehumidifying heat exchanger 410c increases the temperature of the metal fins 20 and the temperature of the air in the vicinity thereof and lowers a relative humidity. With this operation, the water adsorbed into the metal fins 20 is desorbed. The gas-liquid two-phase refrigerant is turned to the liquefied liquid refrigerant (the state (3) shown in Fig. 28).

The refrigerant flows into the on/off valve 360, and the pressure thereof is reduced by the throttle device 630. The refrigerant whose pressure is reduced is turned to the low pressure gas-liquid two-phase refrigerant (the state (4) shown in Fig. 28, it is set to a first evaporation temperature). Then, the gas-liquid two-phase refrigerant flows into the humidifying/dehumidifying heat exchanger 410d and increases the adsorbing performance thereof by lowering the temperature of the metal fins 20 and the temperature of the air in the vicinity thereof by the first evaporation temperature lower than that of air.

The gas-liquid two-phase refrigerant flowing into the humidifying/dehumidifying heat exchanger 410d is turned to the low pressure gas-liquid two-phase refrigerant by evaporating a part thereof (the state (5) shown in Fig. 28). The pressure of the gas-liquid two-phase refrigerant is further reduced by the throttle device 850, flows into the evaporator 700 at a second evaporation temperature (the state (6) shown in Fig. 28), and is turned to the low pressure gas refrigerant by drawing sensible heat of air by heat exchange (the state (7) shown in Fig. 28). The gas refrigerant is sucked again into the compressor 100 and circulates in the refrigerant circuit.

The refrigerating cycle apparatus 1000b causes the refrigerant, which has passed through one of the humidifying/dehumidifying heat exchangers (here, the humidifying/dehumidifying heat exchanger 410c) to pass through bypath piping (here, bypath piping 90) and to flows into the other humidifying/dehumidifying heat exchanger (here, the humidifying/dehumidifying heat exchanger 410d).

Accordingly, the one humidifying/dehumidifying heat exchanger 410 efficiently desorbs moisture making use of the heat of a condensed refrigerant, and the other humidifying/dehumidifying heat exchanger 410 efficiently adsorbs moisture making use of the heat of an evaporated refrigerant to thereby increase an adsorbing/desorbing performance and improve the performance of the refrigerating cycle apparatus.

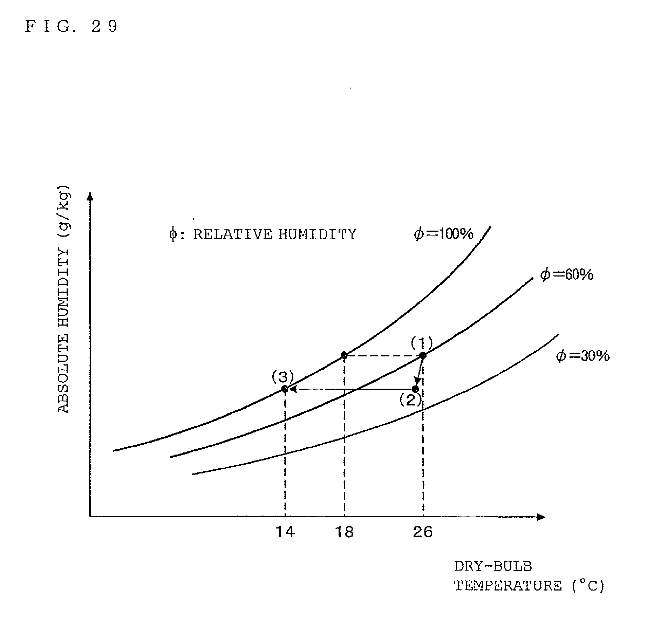

Fig. 29 is a psychrometric chart for explaining an operation of the humidifying/dehumidifying heat exchanger 410d of the refrigerating cycle apparatus 1000b. The operation of the refrigerating cycle apparatus 1000b described above will be explained using the psychrometric chart and the arrangement view of Fig. 26.

In Figs. 26 and 29, as to the air passing through the humidifying/dehumidifying heat exchanger 410d communicating with the inside of the room 4010, the explanation will be made assuming that when the air is in a state before passing through the humidifying/dehumidifying heat exchanger 410d, the air is in the state (1) shown by Fig. 25, when the air is in a state just after passing through the humidifying/dehumidifying heat exchanger 410d, the air is in a state (2) shown by Fig. 29, and when the air is in a state just after exchanging its heat with that of the evaporator 700, the air is in a state (3) shown by Fig. 29.

A case, in which the humidifying/dehumidifying heat exchanger 410d adsorbs moisture in air existing in the inside of the room 4010, will be explained. The air in the state (1) has a dry-bulb temperature of 26 °C and a relative humidity of 60 %. When the air in the above state flows into the humidifying/dehumidifying heat exchanger 410d, it is turned to the air in the state (2) in the humidifying/dehumidifying heat exchanger 410d by the isothermal or by cooling adsorption and flows into the evaporator 700. As described above, since the amount of moisture, which can be adsorbed by the humidifying/dehumidifying heat exchanger 410b, is increased in the region in which the relative humidity is about 30 % or more, the humidity of the air in the state (1) can be reduced.

Then, the air in the state (2) is subjected to heat exchange by the evaporator 700 and turned to the air in the state (3). The air in the state (2) is cooled by removing only the sensible heat thereof by the evaporator 700 in a state of a fixed absolute humidity and turned to the air in the state (3) in which the relative humidity is less than 100 % and the dry-bulb temperature is 14 °C. The air in the state (3) is supplied to the inside of the room 4010.

It is preferable that the control means 800a controls the degrees of opening of the throttle devices 630 and 850, the drive frequency of the compressor 100, the number of revolutions of the blower 910, and the like and adjust the first evaporation temperature to a temperature equal to or higher than the dew point of the air sucked by the humidifying/dehumidifying heat exchanger 410d (so that it is set to 18 °C in the embodiment).

Further, the control means 800a preferably adjusts the second evaporation temperature to a temperature equal to or higher the dew point of the outlet air of the humidifying/dehumidifying heat exchanger 410d (to 14 °C in the embodiment). A dew point temperature is detected by converting the temperature and humidity data detected by the temperature/humidity detecting means 810 and the temperature/humidity detecting means 820 to the dew point by the control means 800a. In Fig. 25, the first evaporation temperature is set to 18 °C, and the second evaporation temperature is set to 14 °C.

Further, the amount of moisture, which can be adsorbed by the humidifying/dehumidifying heat exchanger 410d acting as an adsorption heat exchanger, is limited. Accordingly, when the control means 800a determines that the relative humidity of the evaporator 700 is set to a predetermined threshold value or higher based on the data detected by the temperature/humidity detecting means 810, it switches the flow of the refrigerant by changing the on/off valves 320, 360 and 350 from the open state to the closed state and the on/off valves 330, 370 and 340 from the closed state to the open state. Then, the high temperature/high pressure gas refrigerant flows into the humidifying/dehumidifying heat exchanger 410d so that moisture is desorbed and reproduced by increasing the temperature of the metal fins 20 and the temperature of the air in the vicinity thereof.

On the other hand, since the flow path of the refrigerant is switched, the humidifying/dehumidifying heat exchanger 410c acts as an adsorption heat exchanger. The humidifying/dehumidifying heat exchanger 410c adsorbs moisture in air. As described above, in the refrigerating cycle apparatus 1000b, when one humidifying/dehumidifying heat exchanger (the humidifying/dehumidifying heat exchanger 410d) adsorbs moisture, the moisture of the other humidifying/dehumidifying heat exchanger (the humidifying/dehumidifying heat exchanger 410c) is desorbed, and these operations are alternately switched according to an amount of adsorption of moisture. Accordingly, the humidity (latent heat) of air in the inside of the room 4010 can be continuously removed by switching the air path and the like.

On the other hand, outside air having, for example, the dry-bulb temperature of 32 °C and the relative humidity of 60 % is supplied to the humidifying/dehumidifying heat exchanger 410c from the outside air 5000 side by a blower 900. The humidifying/dehumidifying heat exchanger 410c desorbs the adsorbed moisture. At the time, air whose absolute humidity is increased by the desorption is discharged to the outside air 5000 again.

Although the air is simply discharged here, the desorbed moisture in the air may be used for, for example, humidification. As described above, latent heat is removed by the humidifying/dehumidifying heat exchangers 410c, 41d, and sensible heat is removed by the evaporator 700. Moreover, since the adsorbed water can be desorbed making use of the condensed waste heat in the condenser 200, a cooling/freezing capability can be greatly improved.

Table 2 summarized the control states of the on/off valves 320 to 370 and the functions of the humidifying/dehumidifying heat exchangers 410c and 410d. In Table 2, a pattern 1 shows a case in which the humidifying/dehumidifying heat exchanger 410d adsorbs moisture and the humidifying/dehumidifying heat exchanger 410c desorbs the adsorbed moisture as shown in Fig. 27(b). At the time the on/off valves 320, 360, and 350 are in the open state, and the on/off valves 330, 370, and 340 are in the closed state.

Further, a pattern 2 shows a case in which the humidifying/dehumidifying heat exchanger 410d desorbs adsorbed moisture and the humidifying/dehumidifying heat exchanger 410c adsorbs moisture as shown in Fig. 27(a). At the time, the on/off valves 320, 370, and 340 are in the open state, and the on/off valves 320, 360, and 350 are in the closed state. A continuous operation can be executed by alternately switching the pattern 1 and the pattern 2.

Table 2

| Pattern | Heat exchanger | | Open/close valve | | Open/close valve | | Open/close valve | |
|---|---|---|---|---|---|---|---|---|
| | 40c | 40d | 32 | 33 | 36 | 37 | 34 | 35 |
| 1 | desorb | Adsorb | open | closed | open | closed | closed | open |
| 2 | adsorb | Desorb | closed | open | closed | open | open | closed |

When any of the humidifying/dehumidifying heat exchanger 410c and the humidifying/dehumidifying heat exchanger 410d desorbs moisture, the refrigerant is condensed in the humidifying/dehumidifying heat exchanger. Further, when any of the humidifying/dehumidifying heat exchanger 410c and the humidifying/dehumidifying heat exchanger 410d adsorbs moisture, the refrigerant is evaporated. Since the functions of the humidifying/dehumidifying heat exchanger 410c and the humidifying/dehumidifying heat exchanger 410d can be switched by controlling the degrees of opening of the respective on/off valves to switch the flow of the refrigerant, an operation can be continuously executed while alternately switching adsorption and desorption.

For example, in a conventional refrigerating cycle apparatus, when an air conditioned space has the dry-bulb temperature of 26 °C and the relative humidity of 60 % and outside air has the dry-bulb temperature of 32 °C and the relative humidity of 60 %, both the sensible heat treatment (cooling operation) and the latent heat treatment (dehumidifying operation) of the air conditioned space are executed at the same time by adjusting a balance in the vicinity of the condensing temperature of 47 °C in the condenser 200 and the evaporation temperature 11 °C in the evaporator 700. In the refrigerating cycle apparatus described above, since an evaporation temperature must be set low, the operation efficiency and the like of the refrigerating cycle apparatus is bad.

The refrigerating cycle apparatus 1000b can independently execute both the sensible heat treatment (cooling operation) and the latent heat treatment (dehumidifying operation) of the air conditioned space. Accordingly, since the evaporator 700 need to execute only the sensible heat treatment, an evaporation temperature can be set high. That is, an evaporation temperature conventionally set to 11 °C can be increased to about 14 °C. As a result, the efficiency of the refrigerating cycle can be greatly improved.

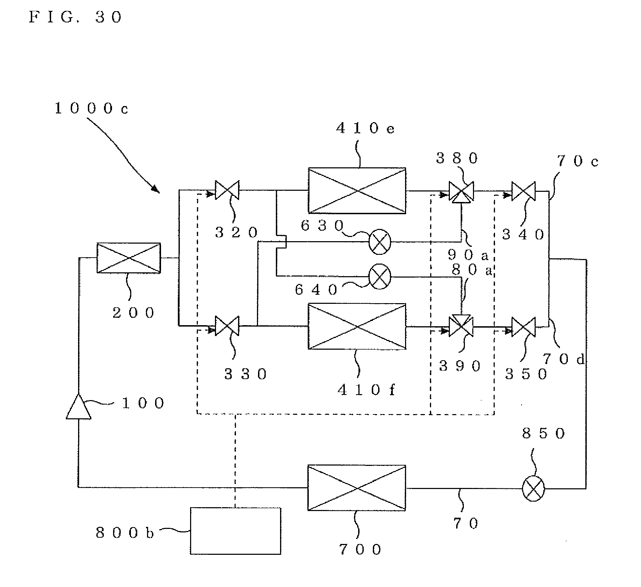

As shown in Fig. 30 described above, the evaporation temperature is proportional to COP. In, for example, the Embodiment 9, it can be found that when the evaporation temperature is 11 °C, COP is about 3.1 ((A) shown in the view), but when the evaporation temperature is increased to 14 °C, COP increases up to about 3.3 ((B) shown in the view). That is, COP is improved about 14 % only by increasing the evaporation temperature by 3 °C.

As described above, according to the refrigerating cycle apparatus 1000b of the Embodiment 11, a defrosting operation need not be executed like the Embodiment 10 described above and further the evaporation temperature of the evaporator 700 can be set high. In particular, in the embodiment, since it is made easy to adsorb moisture by increasing the relative humidity by lowering the temperature of the metal fins 20 of the humidifying/dehumidifying heat exchanger 410c or 41 d on the side where moisture is adsorbed and the temperature of the air in the vicinity thereof by the refrigerant of the first evaporation temperature lower than that of air, an operation having a higher performance can be executed.


Embodiment 12

Fig. 30 is a view showing arrangement example of a refrigerating cycle apparatus 1000c according to an Embodiment 12 of the present invention. The refrigerating cycle apparatus 1000c of the Embodiment 10 will be explained assuming that it is, for example, an air conditioner for executing a cooling/heating operation, although this is not particularly restricted. Further, since the components of Fig. 30, which have the same reference numeral as those of the drawings explained in the Embodiments 9, 10, and 11, execute the same operations, explanation of the components is omitted.

The refrigerating cycle apparatus 1000c is arranged such that a compressor 100, a condenser 200, an on-off valve 320 as a first on-off valve and an on-off valve 330 as a second on-off valve, which are juxtaposed, a humidifying/ dehumidifying heat exchanger 410e and a humidifying/dehumidifying heat exchanger 410f, which are juxtaposed, a three-way valve 380 and a three-way valve 390, which are juxtaposed, an on-off valve 340 and an off-valve 350, which are juxtaposed, a throttle device 850, and an evaporator 700 are sequentially connected with a refrigerant pipeline 70. The refrigerating cycle apparatus 1000c also has the humidifying/dehumidifying heat exchanger 410e (first heat exchanger) and the humidifying/dehumidifying heat exchanger 410f (second heat exchanger) each composed of a heat exchanger 10 having metal fins 20 on the surfaces of which pores are formed, and the like. These two humidifying/ dehumidifying heat exchangers 410e and 410f are independently accommodated in an indoor unit, respectively. Further, a control means 800b controls a three-way valve 380 and a three-way valve 390 and selects a flow path of a refrigerant.

Like the freezing cycle apparatus 1000b according to the Embodiment 11 described above, the refrigerant pipeline 70 is arranged so that it is branched into refrigerant piping 70c and refrigerant piping 70d, the on-off valve 320, the humidifying/dehumidifying heat exchanger 410e and the three-way valve 380 are connected to each other with the refrigerant piping 70c and the on-off valve 330, the humidifying/dehumidifying heat exchanger 410f, and the three-way valve 390 are connected to each other with the refrigerant piping 70b and the refrigerant piping 70c meets with the refrigerant piping 70d again.

The refrigerant described above is preferably used as a refrigerant flowing in the refrigerant pipeline 70. Further, the refrigerant piping 70c and the refrigerant piping 70d are provided with bypath piping 80a (first bypath piping), which branches off from the refrigerant piping 70c between the on/off valve 320 and the humidifying/dehumidifying heat exchanger 410e and meets with the refrigerant piping 70d between the humidifying/ dehumidifying heat exchanger 410f

and the three-way valve 390, and bypath piping 90a (second bypath piping) which is branches off from the refrigerant piping 70d between the on/off valve 330 and the humidifying/dehumidifying heat exchanger 410f and meets with the refrigerant piping 70c between the humidifying/dehumidifying heat exchanger 410e and the three-way valve 380.

A throttle device 630 is installed in the bypath piping 90a. A throttle device 640 is installed in the bypath piping 80a. Further, the refrigerating cycle apparatus 1000c has a temperature/humidity detecting means (not shown) located on the air piping inlet side of the evaporator 700 to detect the temperature and the humidity of the evaporator 700. The type of the temperature/humidity detecting means is not particularly restricted as long as it can detect a temperature and a humidity. They may be composed of, for example, a temperature sensor such as a thermistor, a thermometer, a humidity sensor, a hygrometer, and the like.

The refrigerating cycle apparatus 1000c is provided with a control means (not shown) for controlling the drive frequency of the compressor 100, the degrees of opening of the on/off valves 320 and 330, the degrees of opening of the throttle devices 630, 640 and 850, and the degrees of opening of the three-way valves 380 and 390. The three-way valves 380 and 390 switch the functions (adsorption and desorption) of the humidifying/dehumidifying heat exchanger 410e and the humidifying/dehumidifying heat exchanger 410f by switching the flow of the refrigerant flowing through the refrigerant piping 70c, 70d.

Next, an operation of the refrigerating cycle apparatus 1000c will be explained based on Fig. 30. An operation of the refrigerating cycle apparatus 1000c, in which moisture is desorbed by the humidifying/dehumidifying heat exchanger 410e and adsorbed by the humidifying/dehumidifying heat exchanger 410f by opening the on-off valve 320 and closing the on-off valve 330, will be explained here.

The refrigerant in a high temperature/high pressure gas state, which is compressed by the compressor 100, flows into the condenser 200. The refrigerant in this state turns to a gas-liquid two-phase refrigerant while radiating a part of its heat to the outside air through the condenser 200. The gas-liquid two-phase refrigerant in a high pressure state flows into the humidifying/dehumidifying heat exchanger 410e.
The flowing gas-liquid two-phase refrigerant passes through the heat transfer tubes 30, and, at the time, since the heat of the refrigerant is exchanged with that of air, the temperature of the metal fins 20 and the temperature of the air in the vicinity thereof are increased and the relative humidity is lowered. With this operation, the moisture adsorbed by the metal fins 20 is desorbed. The gas-liquid two-phase refrigerant is turned to a liquefied liquid refrigerant.

The direction, in which the refrigerant flowing out from the humidifying/dehumidifying heat exchanger 410e flows, is determined by controlling the three-way valve 380 by the control means 800b. When the direction is controlled so that the refrigerant flows in a bypath piping 90a, a low pressure gas-liquid two-phase refrigerant flows into the humidifying/dehumidifying heat exchanger 410f as in the Embodiment 11 described above and lowers the temperature of the metal fins 20 and the temperature of the air in the vicinity thereof, so that the performance of adsorption executed by the humidifying/dehumidifying heat exchanger 410f can be improved.
The pressure of the gas-liquid two-phase refrigerant flowing out from the humidifying/dehumidifying heat exchanger 410f is reduced by the throttle device 850 through the three-way valve 390, the on/off valve 350, and the refrigerant piping 70d, the refrigerant flows into the evaporator 700 and turns to a low pressure gas refrigerant by drawing the sensible heat of air by heat exchange. The gas refrigerant is sucked again into the compressor 100 and circulates in a refrigerant circuit. Further, in the operation of the refrigerating cycle apparatus 1000c, in which moisture is desorbed by the humidifying/dehumidifying heat exchanger 410f and adsorbed by the humidifying/dehumidifying heat exchanger 410f by closing the on-off valve 320 and opening the on-off valve 330, the operation of the three-way valve 380 is reversed from that of the three-way valve 390.

As described above, according to the Embodiment 12, since the three-way valves 380 and 390 are provided and it is made easy to adsorb moisture by lowering the temperature of the metal fins 20 of the humidifying/dehumidifying heat exchanger 410e or 41f on the water adsorbing side and the temperature of the air in the vicinity thereof and increasing the humidity likewise the Embodiment 11, an operation having a higher performance can be executed.

Embodiment 13

In the Embodiments 9 to 12 described above, although the heat exchanger 10 and the like of the Embodiments 1 to 8 is applied only to the humidifying/dehumidifying heat exchanger 410, the embodiments are not particularly limited thereto. For example, the metal fins 20 may be also installed in the condenser 200 and the evaporator 700 which act as heat exchangers so that they also execute moisture adsorption and the like.

Further, in the Embodiments 9 to 12 described above, although the two humidifying/dehumidifying heat exchangers 410a and 41b and the like are used so as to alternately adsorb and desorb moisture, the number of the humidifying/dehumidifying heat exchangers 410 is not limited.

In the Embodiments 9 to 12 described above, although the type of the compressor 100 is not particularly limited, an inverter compressor the capacitance of which can be controlled and a constant speed compressor which executes a constant speed operation may be preferably used. Further, although the respective embodiments show the example that one set of the compressor 100 is provided in the refrigerating cycle, the number of compressors is not limited thereto and a plurality of compressors may be provided. In this case, the control means 800 preferably executes multi-controls as many as the number of the compressors provided therewith.

Embodiment 14

Although the respective embodiments explain an example that the control means 800 and 800a control the degrees of opening of the respective on/off valves, the drive frequency of the compressor 100, the degrees of opening of the respective throttle devices, and the degrees of opening of the respective three-way valves, they are not limited thereto. A control means may be arranged in each equipment. Further, the respective embodiments explain an example that one set of the temperature/humidity detecting means 810 is arranged on the air path inlet side of the evaporator 700, they are not limited thereto.

For example, the temperature/humidity detecting means 810 may be separately composed of the temperature detecting means and the humidity detection means, and a plurality of sets of temperature/humidity detecting means 810 may be disposed. Further, pressure detecting means and the like may be disposed in the vicinities of respective equipments to detect the pressure of the refrigerant.

Note that although a case that the refrigerating cycle apparatuses 1000 to 1000c are applied to a refrigerating apparatus, a room air conditioner, a package air conditioner, and the like, they are not limited thereto. The refrigerating cycle apparatuses 1000 to 1000c can be also applied to, for example, a refrigerated warehouse, a humidifying apparatus, a humidity adjusting apparatus, and the like. That is, a refrigerant to be used and an air path and a flow path in the refrigerating cycle may be determined according to an object and a use to which the refrigerating cycle apparatuses are applied.

Industrial Applicability

The heat exchanger according to the prevent invention can be used not only for the air conditioner described above but also for other refrigerating cycle apparatuses such as a refrigerating/freezing apparatus for cooling foods and the like in, for example, a refrigerator/freezer warehouse and the like.

**Claims**

1. A heat exchanger comprising heat transfer tubes acting as flow paths of a refrigerant and metal fins having pores opened inward from the surfaces thereof for adsorbing and desorbing moisture in air within the range of a relative pressure of 0.1 to 0.9 so as to transfer heat of the heat transfer tubes to air, wherein the pores have a diameter of 1 nm to 20 nm and a depth of 1 $\mu$m to 100 $\mu$m.

2. The heat exchanger of claim 1,
   wherein the pores have a diameter of 1 nm to 10 nm.

3. The heat exchanger of claim 2,
   wherein the metal fins have surfaces subjected to a weather and corrosion resistance treatment.

4. The heat exchanger of claim 2,
   wherein the metal fins and the heat transfer tubes are made of the same material.

5. The heat exchanger of claim 2,
   wherein on the metal fins, the diameter of the pores disposed at positions far from the heat transfer tubes is smaller than that of the pores disposed at positions near the heat transfer tubes.

6. A manufacturing method of a heat exchanger comprising heat transfer tubes acting as flow paths of a refrigerant and metal fins having pores for adsorbing and desorbing moisture in air, so that they transfer heat of the heat transfer tubes to air,
   the method comprising:

   a step of forming pores by dipping a fin plate to be a component of the metal fins and cathodes in an electrolyte using the fin plate as an anode, allowing a predetermined amount of electricity to flow between the fin plate and the cathodes, and subjecting both surfaces of the fin plate to an anodizing process; and

a step of executing a heat treatment for preventing the pores formed on the fin plate from being clogged.

7.  The manufacturing method of the heat exchanger of claim 6,
    wherein, in the step of forming the pores, the electrolyte is an acid solution kept at a predetermined temperature, and a voltage is applied so that a constant current flows in the electrolyte or a current control is performed so that a constant voltage is applied to the electrolyte, and further, in the step for executing the heat treatment, a predetermined temperature is kept for a predetermined time.

8.  The manufacturing method of the heat exchanger of claim 6,
    wherein, in the step of forming the pores, the electrolyte is an alkaline aqueous solution kept at a predetermined temperature, and a voltage is applied so that a constant current flows in the electrolyte or a current control is performed so that a constant voltage is applied to the electrolyte, and further, in the step of executing the heat treatment, a predetermined temperature is kept for a predetermined time.

9.  The manufacturing method of the heat exchanger of claim 6,
    wherein in the step of executing the heat treatment, a predetermined temperature is kept for a predetermined time, and the method further comprises a step of executing a chromic acid chemical conversion treatment, in which the fin plate having been subjected to the heat treatment is dipped in a chromic acid solution and then dried.

10. The manufacturing method of the heat exchanger of claim 6,
    wherein in the step of executing the heat treatment, a predetermined temperature is kept for a predetermined time and the method further comprises a step of executing treatment in which a ground layer is formed on the fin plate having been subjected to the heat treatment and a fluororesin paint is applied thereto as top coating.

F I G. 1

F I G. 2

RELATIVE PRESSURE OF ADSORBED MATERIAL P/P0

F I G. 3

F I G. 4

EP 2 172 729 A1

FIG. 5

FIG. 6

FIG. 7

```
┌─────────────────────────┐
│   DEGREASING PROCESS     │⌇ S 1
└─────────────────────────┘
            │
            ▼
┌─────────────────────────┐
│     RINSING PROCESS      │⌇ S 2
└─────────────────────────┘
            │
            ▼
┌─────────────────────────┐
│ ALKALINE ETCHING PROCESS │⌇ S 3
└─────────────────────────┘
            │
            ▼
┌─────────────────────────┐
│     RINSING PROCESS      │⌇ S 4
└─────────────────────────┘
            │
            ▼
┌─────────────────────────┐
│     DESMUT PROCESS       │⌇ S 5
└─────────────────────────┘
            │
            ▼
┌─────────────────────────┐
│     RINSING PROCESS      │⌇ S 6
└─────────────────────────┘
            │
            ▼
┌─────────────────────────┐
│    ANODIZING PROCESS     │⌇ S 7
└─────────────────────────┘
            │
            ▼
┌─────────────────────────┐
│     RINSING PROCESS      │⌇ S 8
└─────────────────────────┘
            │
            ▼
┌─────────────────────────┐
│     HEAT TREATMENT       │⌇ S 9
└─────────────────────────┘
```

F I G. 8

F I G. 9

FIG. 10

PORE DIAMETER [nm]

FIG. 11

RELATIVE PRESSURE P/P0

F I G. 1 2

FREQUENCY [−]

PORE DIAMETER [nm]

F I G. 1 3

AMOUNT OF EQUILIBRIUM ADSORPTION [g/g]

RELATIVE PRESSURE P/P0

F I G. 1 4

PORE DIAMETER [nm]

F I G. 1 5

RELATIVE PRESSURE P/P0

F I G. 1 6

F I G. 1 7

F I G. 18

F I G. 19

FIG. 20

F I G. 2 1

(A) OUTSIDE
ARE FLOW

3100

5000

3010a
3040a

3020a

3020b

3010b

900

910

3040b

410a

410b

4000

3050a

3030a

3030b

3050b

810

3000

700

(B) AIR FLOW

FIG. 22

(a)

(C) OUTSIDE ARE FLOW

5000

3100

3020a

3010a

3040a

3020b

3010b

3040b

900

910

410a

410b

4000

3030a

3050a

3030b

3050b

3000

810

(D) AIR FLOW

700

(b)

3100

(A) OUTSIDE ARE FLOW

5000

3010a

3040a

3020b

3020a

3010b

900

910

410a

410b

3040b

4000

3050a

3030a

3030b

3050b

3000

810

(B) AIR FLOW

700

F I G. 2 3

F I G. 2 4

FIG. 25

FIG. 26

(A) OUTSIDE ARE FLOW

3100

5000

3110a
3140a

3120a 3120b

3110b

900
910
410c 410d

3140b

4010

3150a 3130a 3130b 3150b

810

3000a

700

(B) AIR FLOW

FIG. 27

(a)

(b)

FIG. 28

PRESSURE (P)

(3)    (2)    (1)

(5)
(4)

(6)    (7)

ENTHALPY (h)

FIG. 29

FIG. 30

## INTERNATIONAL SEARCH REPORT

| | International application No. |
|---|---|
| | PCT/JP2008/063353 |

A. CLASSIFICATION OF SUBJECT MATTER
*F28F1/32*(2006.01)i, *B01D53/26*(2006.01)i, *F25B17/08*(2006.01)i

According to International Patent Classification (IPC) or to both national classification and IPC

B. FIELDS SEARCHED

Minimum documentation searched (classification system followed by classification symbols)
F28F1/32, B01D53/26, F25B17/08

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-127683 A (Jun AKIZAWA, Yoshinori HAMAMOTO), 19 May, 2005 (19.05.05), Claim 1; Par. Nos. [0015] to [0037]; Fig. 1 (Family: none) | 1-10 |
| Y | JP 2005-9703 A (Matsushita Electric Industrial Co., Ltd.), 13 January, 2005 (13.01.05), Full text; all drawings (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 September, 2008 (18.09.08) | 30 September, 2008 (30.09.08) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| | International application No. |
|---|---|
| | PCT/JP2008/063353 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 59-179798 A (Mitsubishi Heavy Industries, Ltd.), 12 October, 1984 (12.10.84), Page 2, lower left column, lines 2 to 9; page 2, lower right column, line 11 to page 3, upper left column, line 5 (Family: none) | 9 |
| A | JP 2003-263999 A (Toyota Central Research and Development Laboratories, Inc.), 19 September, 2003 (19.09.03), Full text; all drawings & US 2003/0175569 A1 & EP 1345280 A1 & DE 60315209 D | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10286460 A

- JP 2005127683 A

**Non-patent literature cited in the description**

- Electrochemical Handbook. Maruzen, 449-453